# EUROPEAN PATENT APPLICATION

(11) **EP 4 580 154 A1**
(43) Date of publication of application: **02.07.2025**
(21) Application number: 23870599.0
(22) Date of filing: 21.09.2023
(51) Int. Cl.: H04L 45/16

(54) **METHOD AND APPARATUS FOR DETERMINING NODE**

(30) Priority: 30.09.2022 CN 202211215538
(71) Applicant: Huawei Technologies Co., Ltd., Shenzhen, Guangdong 518129 (CN)
(72) Inventor: DUAN, Fanghong, Shenzhen, Guangdong 518129 (CN); XIE, Jingrong, Shenzhen, Guangdong 518129 (CN); WANG, Heng, Shenzhen, Guangdong 518129 (CN); LIU, Shuying, Shenzhen, Guangdong 518129 (CN)
(74) Representative: Goddar, Heinz J.
(86) International application number: PCT/CN2023/120517
(87) International publication number: WO 2024/067367

(57) **Abstract**

This application discloses a node determining method and apparatus, and relates to the field of communication technologies. The method includes: A first root node receives first information sent by a second root node, where the first information includes multicast source information and a first flag that indicates to determine, through negotiation, a node that forwards a multicast packet; and the first root node performs, based on the multicast source information and the first flag that are carried in the first information, an operation of determining, from the first root node and the second root node, the node that forwards the multicast packet. According to the method, at least two root nodes can elect, through autonomous negotiation, a node configured to forward a multicast packet, without limiting whether IP network segments of interfaces for communication between the at least two root nodes and an edge node of a network on which a multicast source is located are the same.

## Description

This application claims priority to Chinese Patent Application No. 202211215538.5, filed with the China National Intellectual Property Administration on September 30, 2022 and entitled "NODE DETERMINING METHOD AND APPARATUS", which is incorporated herein by reference in its entirety.

### TECHNICAL FIELD

This application relates to the field of communication technologies, and in particular, to a node determining method and apparatus.

### BACKGROUND

A virtual private network (virtual private network, VPN) used to transmit a multicast packet is referred to as a multicast virtual private network (multicast virtual private network, MVPN). The MVPN supports a plurality of point-to-multipoint multicast services on a carrier network (such as an IP backbone network of a carrier).

On the carrier network, at least two root nodes configured to forward a multicast packet from a same multicast source are usually included. Herein, the at least two root nodes separately communicate with an edge node of a customer network on which the multicast source is located, and one or all of the at least two root nodes may receive a multicast packet from the same multicast source via the edge node. However, generally, only one root node may serve as an ingress designated forwarder (Ingress Designated Forwarder, IDF) to forward a multicast packet received by the root node to a leaf node connected to a customer network on which a multicast receiver is located.

Therefore, how to determine, from root nodes of a multicast source, an IDF configured to forward a multicast packet to a leaf node becomes an urgent technical problem to be resolved.

### SUMMARY

This application provides a node determining method and apparatus. The method can flexibly support determining, from at least two root nodes of a multicast source in different scenarios, a node configured to forward a multicast packet.

To achieve the foregoing objective, this application provides the following technical solutions.

According to a first aspect, this application provides a node determining method. The method includes: A first root node receives first information sent by a second root node, where the first information includes multicast source information and a first flag, and the first flag indicates to determine, through negotiation, a node that forwards a multicast packet. The first root node performs, based on the multicast source information and the first flag that are carried in the first information, an operation of determining, from the first root node and the second root node, the node that forwards the multicast packet.

According to the method provided in this application, the first root node may determine, from the first root node and the second root node based on the first flag and the multicast source information that are received from the second root node, the node that forwards the multicast packet. Similarly, for the second root node, the second root node may also determine, from the first root node and the second root node based on a first flag and multicast source information that are received from the first root node, a node that forwards a multicast packet. In this way, an objective that the first root node and the second root node elect, through autonomous negotiation, the node that forwards the multicast packet is achieved, without limiting whether IP network segments of interfaces for communication between at least two root nodes and an edge node of a network on which a multicast source is located are the same.

In a possible design, that the first root node performs, based on the multicast source information and the first flag that are carried in the first information, an operation of determining, from the first root node and the second root node, the node that forwards the multicast packet includes: The first root node performs, based on the first flag carried in the first information, the operation of determining the node that forwards the multicast packet. The first root node determines, from the first root node and the second root node based on the multicast source information carried in the first information, multicast source information corresponding to the first root node, and multicast source information corresponding to the second root node, the node that forwards the multicast packet.

In another possible design, the first information further includes a first identifier of the second root node, and the first identifier of the second root node is used by the first root node to determine, from the first root node and the second root node, the node that forwards the multicast packet. The method further includes: The first root node obtains a sorting result based on an identifier of the first root node and the first identifier of the second root node. The first root node determines, based on the sorting result, that the first root node is the node that forwards the multicast packet. In this possible design manner, the node that forwards the multicast packet can be quickly determined from the first root node and the second root node, thereby improving efficiency of determining the node that forwards the multicast packet.

In another possible design, the first information further includes a first identifier of the second root node, and the first identifier of the second root node is used by the first root node to determine, from the first root node and the second root node, the node that forwards the multicast packet. The method further includes: The first root node obtains a first index based on a first multicast group address included in a received first multicast join request and a first multicast source address that matches the multicast source information. The first root node obtains a second index based on a second multicast group address included in a received second multicast join request and a second multicast source address that matches the multicast source information. The first root node further obtains a sorting result based on an identifier of the first root node and the first identifier of the second root node. Further, the first root node determines, based on the obtained first index and the obtained sorting result, that the first root node is a node that forwards a multicast packet from the first multicast source address, or determines, based on the obtained second index and the obtained sorting result, that the first root node is a node that forwards a multicast packet from the second multicast source address. The multicast packet from the first multicast source address may be referred to as a first multicast stream, and the multicast packet from the second multicast source address may be referred to as a second multicast stream. In this way, the first root node may determine, based on the obtained first index and the obtained sorting result, that the first root node is a node that forwards the first multicast stream, or determine, based on the obtained second index and the obtained sorting result, that the first root node is a node that forwards the second multicast stream. In this possible design manner, the first root node and the second root node perform load sharing forwarding on multicast packets that are forwarded by an edge node of a first network and whose destination addresses are different multicast groups. In this way, a problem that link congestion may be caused when all multicast packets are forwarded via one root node can be avoided.

In another possible design manner, the first information is upstream multicast hop (upstream multicast hop, UMH) routing information, a network layer reachability information (network layer reachability information, NLRI) key (key) of the first information includes multicast source information, and an extended attribute field of the first information includes a border gateway protocol (border gateway protocol, BGP) attribute field, a community attribute field, or an extended community attribute field that is used to carry the first flag.

In another possible design, the NLRI key further includes a route distinguisher (route distinguisher, RD) of the second root node, or the NLRI key further includes an RD of the second root node and a second identifier of the second root node. The second identifier of the second root node is used to distinguish routing information sent by the second root node from routing information sent by another node.

In another possible design manner, the first information is UMH routing information, and a virtual routing forwarding route import extended community (virtual routing forwarding route import extended community, VRI) field of the UMH routing information is used to carry the first identifier of the second root node.

In another possible design, the first information is UMH routing information, and an NLRI key of the UMH routing information includes an RD of the second root node, or an NLRI key of the UMH routing information includes an RD of the second root node and a second identifier of the second root node.

In the foregoing several possible design manners, the multicast source information and the first flag can be carried in the existing UMH routing information. It can be learned that this solution is highly applicable. In addition, when RDs of root nodes on a same VPN are set to a same value, in the foregoing possible design manner, a second flag of the second root node is carried in the first information, so that the first information sent by the second root node can be distinguished from routing information sent by another root node. Therefore, when the first information is forwarded by a route reflector, the first information is not filtered out.

In another possible design, when the first root node is a node that forwards a multicast packet from a third multicast source, the method further includes: The first root node sends the multicast source information and the first flag to a leaf node of a third multicast group, so that the leaf node of the third multicast group determines that a multicast packet that is from the first root node and that matches the multicast source information is a valid packet, where the multicast source information is used to identify the third multicast source. For example, the third multicast source may be the foregoing first multicast source, or may be the foregoing second multicast source. In this possible design manner, the leaf node of the third multicast group may be automatically triggered to start an anycast-RPF check for the multicast packet from the third multicast source, without requiring manual configuration, thereby improving network configuration efficiency.

In another possible design manner, the first root node is a node that forwards a multicast packet from a third multicast source, and the method further includes: The first root node sends an attribute distinguisher of the first root node to a leaf node of a third multicast group, where the attribute distinguisher of the first root node corresponds to an IPv6-based loopback address of the first root node, and the attribute distinguisher of the first root node is used to distinguish between multicast join requests sent by the leaf node to the first root node. In this possible design manner, when the leaf node and the first root node are not in one autonomous system (autonomous system, AS), it indicates that the multicast join request sent by the leaf node to the first root node needs to be transmitted across ASs. Therefore, the attribute distinguisher of the first root node received by the leaf node from the first root node is filled in a source AS field of the multicast join request sent by the leaf node to the first root node across the ASs, so that the multicast join request sent by the leaf node to the first root node across the ASs can be distinguished from a multicast join request sent by the leaf node to another root node across ASs.

In another possible design manner, the first information further includes bidirectional forwarding detection (bidirectional forwarding detection, BFD) information, and the BFD information includes a BFD session discriminator of the second root node and an interface address of the second root node.

In another possible design, when the second root node is a node that forwards a multicast packet from a fourth multicast source, and the fourth multicast source may be the foregoing first multicast source, or may be the foregoing second multicast source. The method further includes: The first root node establishes a BFD session with the second root node based on the received BFD information. In this way, after the first root node determines, based on the BFD session, that the second root node is faulty, the first root node forwards the multicast packet from the fourth multicast source to a leaf node of a fourth multicast group.

In the foregoing two possible design manners, after the first root node and the second root node elect and determine, through autonomous negotiation, the node configured to forward the multicast packet, fault switching may be performed between the first root node and the second root node by using a BFD detection mechanism, thereby ensuring continuity of multicast packet forwarding and improving user experience.

According to a second aspect, this application provides a node determining method. The method includes: A first root node receives a multicast packet sent by a user edge node, and sends the multicast packet to a leaf node that joins a multicast group corresponding to the first root node. The first root node that is configured to receive the multicast packet from the user edge node and forward the multicast packet to the leaf node of the multicast group corresponding to the first root node is a node that is determined by the user edge node from the first root node and a second root node according to a preset policy and that is configured to forward the multicast packet.

According to the method provided in this application, a scenario in which a user edge node of a network on which a multicast source is located selects, from a plurality of root nodes connected to the user edge node, a node configured to forward a multicast packet can be supported.

In a possible design, the preset policy includes: randomly selecting, from the first root node and the second root node, the node configured to forward the multicast packet; or selecting, from the first root node and the second root node according to a load balancing algorithm, the node configured to forward the multicast packet.

In another possible design manner, that a first root node receives a multicast packet sent by a user edge node includes: The first root node receives the multicast packet sent through a first interface of the user edge node, where the first interface is an interface that is in an Ethernet link aggregation (Ethernet-Trunk, Eth-Trunk) interface, that is determined according to the preset policy, and that is used to send the multicast packet.

In another possible design, the method further includes: The first root node sends multicast source information and a second flag to the leaf node, so that the leaf node determines that a multicast packet that is from the first root node and that matches the multicast source information is a valid packet, where the second flag indicates the node that is determined to forward the multicast packet. According to this possible design, it can be ensured that the leaf node determines the multicast packet received from the first root node as the valid packet.

In another possible design, the method further includes: The first root node sends an attribute distinguisher of the first root node to the leaf node, where the attribute distinguisher of the first root node corresponds to an IPv6-based loopback address of the first root node, and the attribute distinguisher of the first root node is used to distinguish between multicast join requests sent by the leaf node to the first root node. In this possible design manner, when the leaf node and the first root node are not in one AS, it indicates that the multicast join request sent by the leaf node to the first root node needs to be transmitted across ASs. Therefore, the attribute distinguisher of the first root node received by the leaf node from the first root node is filled in a source AS field of the multicast join request sent by the leaf node to the first root node across the ASs, so that the multicast join request sent by the leaf node to the first root node across the ASs can be distinguished from a multicast join request sent by the leaf node to another root node across ASs.

In another possible design, the method further includes: The first root node receives third information sent by the second root node, where the third information includes multicast source information and a second flag, the second flag indicates a node that is determined to forward a multicast packet, and the third information is used by the first root node to determine, as valid packets, multicast packets that are from the user edge node and the second root node and that match the multicast source information. In this possible design manner, it can be ensured that all multicast packets that are received by the first root node from the user edge node and the second root node and that match the multicast source information are determined as valid packets.

According to a third aspect, this application provides a node determining method. The method includes: A first edge node obtains a second flag, and determines, from a first root node and a second root node according to a second indication and a preset policy, a node that forwards a multicast packet. The first edge node is a user edge node of a network on which a multicast source is located. The second flag indicates a node that is determined to forward the multicast packet.

According to the method provided in this application, a scenario in which the first edge node selects, from a plurality of root nodes connected to the first edge node, a node configured to forward a multicast packet can be supported.

In a possible design, the preset policy includes: randomly selecting, from the first root node and the second root node, the node configured to forward the multicast packet; or selecting, from the first root node and the second root node according to a load balancing algorithm, the node configured to forward the multicast packet.

In another possible design, the first edge node includes an Eth-Trunk interface, the Eth-Trunk interface includes a first interface for communicating with the first root node and a second interface for communicating with the second root node. That the first edge node determines, from a first root node and a second root node according to a second indication and a preset policy, a node that forwards a multicast packet includes: The first edge node determines a target interface from the first interface and the second interface according to the second indication and the preset policy, and determines a root node that communicates with the target interface as the node that forwards the multicast packet.

In another possible design, the method further includes: sending a multicast packet from the multicast source to the node that is determined to forward the multicast packet.

According to a fourth aspect, this application provides a node determining apparatus.

In a possible design, the node determining apparatus is configured to perform any method provided in the first aspect. In this application, the node determining apparatus may be divided into functional modules according to any method provided in the first aspect. For example, different functional modules may be obtained through division to separately perform corresponding functions, or two or more functions may be integrated into one processing module. For example, in this application, the node determining apparatus may be divided into a receiving unit, an execution unit, and the like based on functions. For descriptions of possible technical solutions performed by the foregoing functional modules obtained through division and beneficial effect, refer to the technical solutions provided in the first aspect or the possible designs corresponding to the first aspect. Details are not described herein again.

In another possible design, the node determining apparatus is configured to perform any method provided in the second aspect. In this application, the node determining apparatus may be divided into functional modules according to any method provided in the second aspect. For example, different functional modules may be obtained through division to separately perform corresponding functions, or two or more functions may be integrated into one processing module. For example, in this application, the node determining apparatus may be divided into a receiving unit, a sending unit, and the like based on functions. For descriptions of possible technical solutions performed by the foregoing functional modules obtained through division and beneficial effect, refer to the technical solutions provided in the second aspect or the possible designs corresponding to the second aspect. Details are not described herein again.

In another possible design, the node determining apparatus is configured to perform any method provided in the third aspect. In this application, the node determining apparatus may be divided into functional modules according to any method provided in the third aspect. For example, different functional modules may be obtained through division to separately perform corresponding functions, or two or more functions may be integrated into one processing module. For example, in this application, the node determining apparatus may be divided into an obtaining unit, a determining unit, and the like based on functions. For descriptions of possible technical solutions performed by the foregoing functional modules obtained through division and beneficial effect, refer to the technical solutions provided in the third aspect or the possible designs corresponding to the third aspect. Details are not described herein again.

In another possible design, the node determining apparatus includes a memory, a network interface, and one or more processors. The one or more processors receive or send data through the network interface. The one or more processors are configured to read program instructions stored in the memory, to perform any method provided in any one of the possible implementations of the first aspect, the second aspect, or the third aspect.

According to a fifth aspect, this application provides a computer-readable storage medium. The computer-readable storage medium includes program instructions. When the program instructions are run on a computer or a processor, the computer or the processor is enabled to perform any method provided in any one of the possible implementations of the first aspect, the second aspect, or the third aspect.

According to a sixth aspect, this application provides a computer program product. When the computer program product runs on a node determining apparatus, any method provided in any one of the possible implementations of the first aspect, the second aspect, or the third aspect is performed.

It may be understood that any one of the apparatus, the computer storage medium, the computer program product, the chip system, or the like provided above may be used in the corresponding method provided above. Therefore, for beneficial effect that can be achieved by any one of the apparatus, the computer storage medium, the computer program product, the chip system, or the like, refer to the beneficial effect of the corresponding method. Details are not described herein.

In this application, names of the foregoing node determining apparatuses do not constitute any limitation to devices or functional modules. During actual implementation, these devices or functional modules may have other names. Each device or functional module falls within the scope defined by the claims and their equivalent technologies in this application, provided that a function of the device or functional module is similar to that described in this application.

### BRIEF DESCRIPTION OF DRAWINGS

FIG. 1 is a diagram of a multicast network architecture according to an embodiment of this application;
FIG. 2 is a diagram of another multicast communication architecture according to an embodiment of this application;
FIG. 3 is a diagram of a structure of a routing device according to an embodiment of this application;
FIG. 4 is a schematic flowchart of a node determining method according to an embodiment of this application;
FIG. 5 is a diagram of a structure of an NLRI key in first information when an information format of the first information is UMH routing information according to an embodiment of this application;
FIG. 6 is a schematic flowchart of a specific method for determining, from a first root node and a second root node, a node that forwards a multicast packet according to an embodiment of this application;
FIG. 7 is a schematic flowchart of another specific method for determining, from a first root node and a second root node, a node that forwards a multicast packet according to an embodiment of this application;
FIG. 8 is a schematic flowchart of another node determining method according to an embodiment of this application;
FIG. 9 is a schematic flowchart of another node determining method according to an embodiment of this application;
FIG. 10 is a diagram of a structure of first BFD information according to an embodiment of this application;
FIG. 11 is a diagram of leaf nodes corresponding to a first multicast group and a second multicast group according to an embodiment of this application;
FIG. 12 is a diagram of still another multicast network architecture according to an embodiment of this application;
FIG. 13 is a schematic flowchart of another node determining method according to an embodiment of this application;
FIG. 14 is a schematic flowchart of another node determining method according to an embodiment of this application;
FIG. 15 is a diagram of a structure of a node determining apparatus 150 according to an embodiment of this application;
FIG. 16 is a diagram of a structure of a node determining apparatus 160 according to an embodiment of this application; and
FIG. 17 is a diagram of a structure of a node determining apparatus 170 according to an embodiment of this application.

### DESCRIPTION OF EMBODIMENTS

To understand embodiments of this application more clearly, the following describes some terms or technologies used in embodiments of this application.

### (1) Multicast join request

Multicast (Multicast) is a one-to-many (or point-to-multipoint) communication mode, and is usually implemented between a source host and a plurality of (or a group of) destination hosts on a network. In multicast, there is one transmitter and a plurality of receivers. The transmitter is a multicast source, and the receiver is a multicast receiver configured to receive a multicast packet sent by the multicast source. A plurality of multicast receivers corresponding to one multicast source may form one multicast group. Between the multicast source and the multicast group, a switch, a router, and/or the like selectively replicate/replicates and forward/forwards the multicast packet based on respective multicast forwarding entries. In an example, for video/audio conferences, network television, and stock market release, sending is generally performed through multicast.

To ensure that the multicast packet sent by the multicast source can be correctly addressed to the multicast group on the network, the multicast group is allocated with a network address. In addition, the multicast source and the multicast group, as matching objects, are a combination, and may be generally represented as (S, G). S is an initial letter of Source, indicating a multicast source address. G is an initial letter of Group, indicating a multicast group address.

For a multicast group that matches a multicast source (for example, a multicast group 1 that matches a multicast source 1), when a new host needs to receive a multicast packet sent by the multicast source 1 to the multicast group 1, the host can request to join the multicast group 1. Specifically, the host may send, to the multicast source 1, a multicast join request that carries a multicast source address and a multicast group address (S1, G1), so that when forwarding the multicast join request of the host to the multicast source 1, each forwarding node on a communication link between the host and the multicast source 1 generates or updates, based on (S1, G1) carried in the received multicast join request, a multicast forwarding entry for forwarding the multicast packet to the multicast group 1. For a forwarding node 1 on the communication link between the host and the multicast source 1, when determining that the forwarding node 1 does not have a multicast forwarding entry including (S1, G1), the forwarding node 1 generates a multicast forwarding entry including (S1, G1), where the multicast forwarding entry includes an address of the multicast source 1, an address of the multicast group 1, an inbound interface address, and an outbound interface list. The inbound interface address is an interface address that is of the forwarding node 1 and that receives the multicast packet, and the outbound interface list includes an interface address that is of the forwarding node 1 and that is used to communicate with a node that sends the multicast join request to the forwarding node 1. When determining that the forwarding node 1 has the multicast forwarding entry including (S1, G1), the forwarding node 1 only needs to update the outbound interface list in the multicast forwarding entry including (S1, G1), that is, the forwarding node 1 adds an interface address that is of the forwarding node 1 and that is used to communicate with the node that sends the multicast join request to the forwarding node 1 to the outbound interface list. In this way, when any forwarding node on the communication link between the multicast source 1 and the host that sends the multicast join request subsequently receives a multicast packet from the multicast source 1, the forwarding node may forward the received multicast packet through each outbound interface indicated in the outbound interface list in the local multicast forwarding entry.

### (2) Anycast-reverse path forwarding (anycast-reverse path forwarding, Anycast-RPF) check

An anycast-RPF check function is used to determine whether a packet received by a node is a valid packet. When the packet received by the node is a valid packet, the node may process and/or forward the packet. When the packet received by the node is an invalid packet, the node may discard the packet.

Specifically, when the node enables the anycast-RPF check function, the node needs to first complete configuration of an anycast-RPF list. For example, the node needs to first generate an anycast-RPF list, and write an address and/or an identifier of a node that sends a valid packet to the node into the anycast-RPF list. Further, after receiving a packet sent by another node, the node may determine whether an address and/or an identifier of the node that sends the packet exists in the anycast-RPF list of the node. If the address and/or the identifier of the node that sends the packet exists in the anycast-RPF list of the node, the node may determine the received packet as a valid packet. If the address of the node that sends the packet does not exist in the anycast-RPF list of the node, the node may determine the received packet as an invalid packet.

### (3) Other terms

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

Terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application. It should be understood that determining B based on A does not mean that B is determined based on only A, and B may alternatively be determined based on A and/or other information.

In a multicast network architecture, there are at least two root nodes configured to forward a multicast packet of a multicast source. Currently, the at least two root nodes may perform, based on a virtual router redundancy protocol (virtual router redundancy protocol, VRRP), an IDF-negotiated warm backup solution, that is, negotiate which root node in the at least two root nodes is served as an IDF to forward a multicast packet received by the root node to a leaf node. The leaf node in the multicast network architecture is configured to forward a multicast packet between the root node and an edge node of a customer network on which a multicast receiver is located. In the at least two root nodes in the multicast network architecture, the root node, serving as the IDF, is a primary root node, and one root node other than the primary root node in the at least two root nodes may be used as a secondary root node. Further, when the primary root node is faulty, or a link between the primary root node and the edge node of the customer network on which the multicast source is located is faulty, the secondary root node may immediately take over IDF work of the primary root node, to forward a multicast packet received by the secondary root node to the leaf node.

However, in the VRRP-based warm backup solution, due to a feature limitation of the VRRP, the solution supports only a case in which an interface for communication between the primary root node and the edge node of the customer network on which the multicast source is located and an interface for communication between the secondary root node and the edge node of the customer network on which the multicast source is located are in a same internet protocol (internet protocol, IP) network segment, and does not support a case in which an interface for communication between the primary root node and the edge node of the customer network on which the multicast source is located and an interface for communication between the secondary root node and the edge node of the customer network on which the multicast source is located are not in a same IP network segment. In addition, this solution depends on that the primary root node and the secondary root node need to simultaneously receive multicast packets sent by the edge node of the customer network on which the multicast source is located. For the edge node of the customer network on which the multicast source is located, the VRRP-based warm backup solution does not support a scenario in which the edge node performs IDF selection among a plurality of connected root nodes. In addition, in the VRRP-based warm backup solution, for the leaf node that receives the multicast packet sent by the root node and forwards the received multicast packet to the edge node of the customer network on which the multicast receiver is located, an anycast-RPF check function needs to be manually configured for the leaf node. To be specific, an address of the primary root node and an address of the secondary root node need to be manually added to an anycast-RPF list of the leaf node. Therefore, when receiving the multicast packet forwarded by the primary root node or the secondary root node, the leaf node may determine, by determining that an address carried in the multicast packet exists in the anycast-RPF list of the leaf node, that the multicast packet received from the primary root node or the secondary root node is a valid packet, so that the leaf node may further process and/or forward the received multicast packet.

Based on this, an embodiment of this application provides a node determining method. In the method, at least two root nodes in a multicast network architecture may autonomously negotiate, in the at least two root nodes, a node (that is, autonomously negotiate as a forwarding node of an IDF) that is configured to forward a multicast packet to a leaf node. This manner is referred to as a node determining method in an active mode in this specification. According to the method, when all the at least two root nodes can receive a multicast packet sent by a user edge node of a network on which a multicast source is located, an objective that the at least two root nodes can autonomously negotiate the node that forwards the multicast packet is achieved, without limiting whether IP network segments of interfaces for communication between the at least two root nodes and the user edge node of the network on which the multicast source is located are the same. According to the method provided in this embodiment of this application, a user edge node that communicates with at least two root nodes and that is on a network on which a multicast source is located may further determine, from the at least two root nodes, a node configured to forward a multicast packet to a leaf node. This manner is referred to as a node determining method in a passive mode in this specification. According to the method, in a scenario in which only one root node in the at least two root nodes can receive a multicast packet sent by the user edge node of the network on which the multicast source is located, the node configured to forward the multicast packet to the leaf node can be determined from the at least two root nodes.

In addition, in the method provided in this embodiment of this application, for the leaf node that communicates with the root node, the leaf node may allow the root node to automatically trigger an anycast-RPF check function without manual intervention, thereby improving network configuration efficiency and user experience.

The root node is the root node in the multicast network architecture, and the leaf node is the leaf node in the multicast network architecture. In the multicast network architecture, the root node and leaf node are usually network-side edge (provider edge, PE) devices on a backbone network of a carrier. The root node is configured to forward the multicast packet between the leaf node and the edge node of the network on which the multicast source is located in the multicast network architecture, and the leaf node is configured to forward the multicast packet between the root node and the edge node of the network on which the multicast receiver is located in the multicast network architecture. Generally, the network on which the multicast source is located and the network on which the multicast receiver is located are both customer networks. Therefore, the edge node of the network on which the multicast source is located and the edge node of the network on which the multicast receiver is located are both customer edge (customer edge, CE) devices (or referred to as user edge devices/nodes). For example, the CE device and the PE device may be routing devices of a switch and a router. This is not limited herein.

It should be noted that, in addition to being applied to the multicast network architecture, the method provided in this embodiment of this application may be further applied to a point-to-multipoint (point 2 multiple point, P2MP) master station communication network. In other words, the root node may be a root node on the P2MP communication network, and correspondingly, the leaf node is a leaf node on the P2MP communication network. For a brief description, an example in which the method provided in this embodiment of this application is applied to the multicast network architecture is used below for description.

An embodiment of this application further provides a multicast network architecture. A node determining method provided in this embodiment of this application may be applied to the multicast network architecture. The multicast network architecture includes a multicast source, a user edge node of a network on which the multicast source is located, at least two root nodes, one or more leaf nodes, a user edge node of a network on which a multicast receiver is located, and the multicast receiver. Generally, nodes in the multicast network architecture belong to a same MVPN. For a brief description, in the following, the network on which the multicast source is located is referred to as a first network, the network on which the multicast receiver is located is referred to as a second network, and a network on which the root node and the leaf node are located is referred to as a third network. For descriptions of the network on which the root node and the leaf node are located, the network on which the multicast source is located, and the network on which the multicast receiver is located, refer to the foregoing descriptions. Details are not described again.

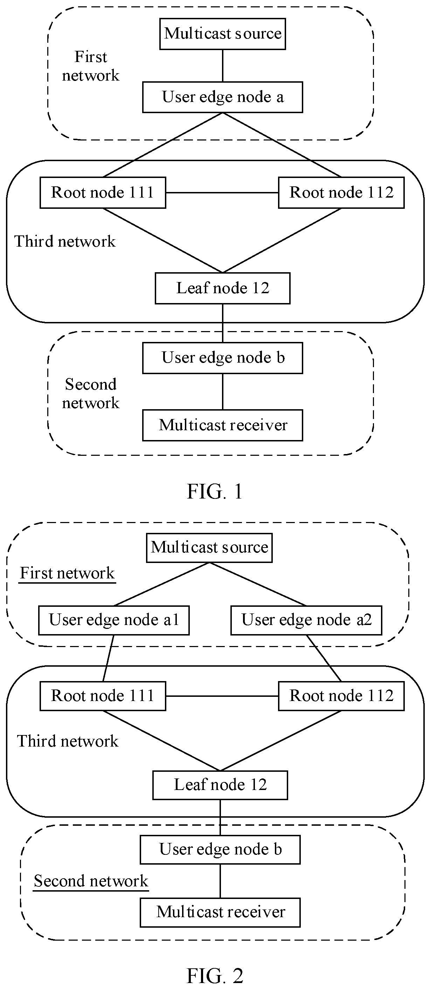

For example, there are two root nodes in the multicast network architecture. FIG. 1 is a diagram of a multicast network architecture according to an embodiment of this application. As shown in FIG. 1, an architecture 10 includes a multicast source and a user edge node a on a first network, the architecture 10 further includes a multicast receiver and a user edge node b on a second network, and the architecture 10 further includes a root node 111, a root node 112, and a leaf node 12 on a third network.

The multicast source communicates with the user edge node a. The user edge node a is separately connected to and communicates with the root node 111 and the root node 112 through two interfaces. For example, the user edge node a communicates with the root node 111 through an interface 1, and the user edge node a communicates with the root node 112 through an interface 2. Optionally, the interface 1 and the interface 2 of the user edge node a may be bundled interfaces, and the bundled interface is, for example, an Ethernet link aggregation (Ethernet-Trunk, Eth-Trunk) interface. The root node 111 and the root node 112 further separately communicate with the leaf node 12, so that the leaf node may transmit a packet between the root node and the user edge node b of the second network. Optionally, the root node 111 and the root node 112 may further communicate with a leaf node other than the leaf node 12 (not shown in FIG. 1). The leaf node communicates with a user edge node on a network on which a multicast receiver that is different from the multicast receiver shown in FIG. 1 is located.

In this way, in the architecture 10, after receiving a multicast packet of the multicast source, the user edge node a of the first network forwards the multicast packet to the root node 111 and/or the root node 112, so that a root node, serving as an IDF, in the root node 111 and the root node 112 may forward the received multicast packet to the leaf node 12, and the leaf node 12 forwards the received multicast packet to the user edge node b of the second network. In this way, the multicast receiver that communicates with the user edge node b may receive the multicast packet from the user edge node b.

With reference to FIG. 1, FIG. 2 is a diagram of another multicast communication architecture according to an embodiment of this application. As shown in FIG. 2, a difference between an architecture 20 and the architecture 10 only lies in that a first network of the architecture 20 includes two user edge nodes: a user edge node a1 and a user edge node a2. The user edge node a1 communicates with a root node 111, and the user edge node a2 communicates with a root node 112. In this case, a multicast packet of a multicast source may be sent to the root node 111 via the user edge node a1, and the multicast packet of the multicast source is further sent to the root node 112 via the user edge node a2. In the architecture 20, a communication process between the root node and a leaf node and between the leaf node and a user edge node b of a second network on which a multicast receiver is located are shown in FIG. 1. Details are not described again.

An embodiment of this application further provides a node determining apparatus. The determining apparatus may be applied to any root node shown in FIG. 1 or FIG. 2, or may be applied to a user edge node that is on a first network and that communicates with the root node shown in FIG. 1 or FIG. 2, to perform a corresponding method in the following.

Optionally, the determining apparatus provided in this embodiment of this application may be any root node shown in FIG. 1 or FIG. 2, or a functional module in the root node. Alternatively, the determining apparatus provided in this embodiment of this application may be the user edge node that is on the first network, that communicates with the root node, and that is shown in FIG. 1 or FIG. 2, or a functional module in the user edge node. This is not limited herein. In an example, the root node and the user edge node herein may be routing devices of a switch or a router. This is not limited herein.

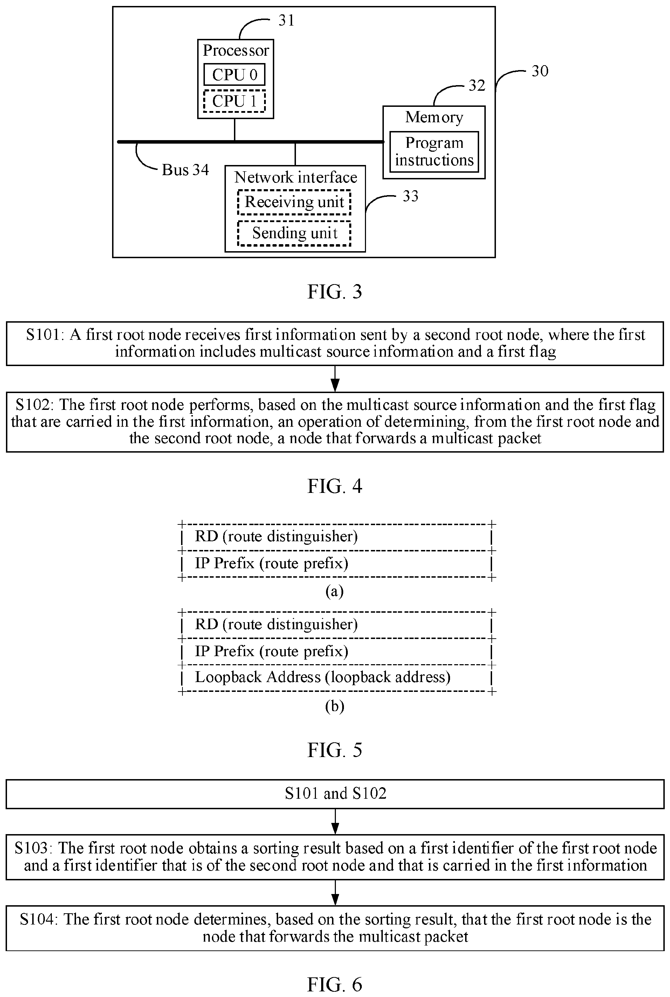

In an example, FIG. 3 is a diagram of a structure of a routing device according to an embodiment of this application. As shown in FIG. 3, a routing device 30 includes a processor 31, a memory 32, a network interface 33, and a bus 34. The processor 31, the memory 32, and the network interface 33 are connected through the bus 34.

The processor 31 is a control center of the routing device 30, and may be a general-purpose central processing unit (central processing unit, CPU). Alternatively, the processor 31 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, a graphics processing unit (graphics processing unit, GPU), a neural network processing unit (neural processing unit, NPU), a tensor processing unit (tensor processing unit, TPU) or an artificial intelligence (artificial intelligent) chip, a data processing unit (data processing unit, DPU), or the like.

In an example, the processor 31 may include one or more CPUs, such as a CPU 0 and a CPU 1 shown in FIG. 3. In addition, a quantity of processor cores in each processor is not limited in this application.

The memory 32 is configured to store program instructions or data to be accessed by an application process. The processor 31 may execute the program instructions in the memory 32, to implement a node determining method provided in embodiments of this application.

The memory 32 may include a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The non-volatile memory may be a storage class memory (storage class memory, SCM), a solid-state drive (solid-state drive, SSD), a hard disk drive (hard disk drive, HDD), or the like. The storage class memory may be, for example, a non-volatile memory (non-volatile memory, NVM), a phase-change memory (phase-change memory, PCM), or a persistent memory.

In a possible implementation, the memory 32 may be independent of the processor 31. The memory 32 may be connected to the processor 31 through the bus 34, and is configured to store data, instructions, or program code. When invoking and executing the instructions or the program code stored in the memory 32, the processor 31 can implement the node determining method provided in embodiments of this application.

In another possible implementation, the memory 32 may be integrated with the processor 31.

The network interface 33 is configured to connect the routing device 30 to another device (for example, the root node or the user edge node a shown in FIG. 1) over a communication network. The communication network may be an Ethernet, a radio access network (radio access network, RAN), a wireless local area network (wireless local area network, WLAN), or the like. The network interface 33 includes a receiving unit configured to receive data/a packet and a sending unit configured to send data/a packet.

The bus 34 may be an industry standard architecture (industry standard architecture, ISA) bus, a peripheral component interconnect (peripheral component interconnect, PCI) bus, a high-speed serial computer extended bus (peripheral component interconnect express, PCIe), a compute express link (compute express link, CXL), an extended industry standard architecture (extended industry standard architecture, EISA) bus, or the like. The bus may be classified into an address bus, a data bus, a control bus, and the like. For ease of representation, only one thick line is for representing the bus in FIG. 3, but this does not mean that there is only one bus or only one type of bus.

It should be noted that the structure shown in FIG. 3 does not constitute a limitation on the routing device 30. In addition to the components shown in FIG. 3, the routing device 30 includes more or fewer components than those shown in FIG. 3, or combines some components, or has different component arrangements.

The following describes, with reference to the accompanying drawings, a node determining method provided in embodiments of this application.

FIG. 4 is a schematic flowchart of a node determining method according to an embodiment of this application. The method may be referred to as a node determining method in an active mode. Optionally, the method may be applied to the architecture 10 shown in FIG. 1 or FIG. 2, and is performed by the root node that is in the architecture 10 and that has the hardware structure shown in FIG. 3. The method may include the following steps.

S101: A first root node receives first information sent by a second root node, where the first information includes multicast source information and a first flag.

Both the first root node and the second root node are root nodes in the multicast network architecture. For example, the first root node is any root node in the architecture shown in FIG. 1 or FIG. 2, and the second root node is one root node other than the first root node in the architecture shown in FIG. 1 or FIG. 2. For example, the first root node is the root node 111 in the architecture shown in FIG. 1 or FIG. 2, and the second root node is the root node 112 in the architecture shown in FIG. 1 or FIG. 2.

The first root node and the second root node are used as two root nodes of a multicast source. In the method shown in FIG. 4, a user edge node that communicates with the multicast source separately sends a received same multicast packet to the two root nodes, that is, the two root nodes may receive the same multicast packet.

The multicast source information carried in the first information is used by the first root node that receives the multicast source information to obtain a route prefix of the multicast source. Optionally, the multicast source information is the route prefix of the multicast source. Therefore, the root node receives the multicast source information carried in the first information, that is, obtains the route prefix of the multicast source. Optionally, the multicast source information includes an identifier of the multicast source, and the first root node that receives the multicast source information may obtain the route prefix of the multicast source based on the identifier that is of the multicast source and that is carried in the multicast source information. This is not limited thereto.

In an example, after obtaining the multicast source information of the multicast source from the multicast source, a user edge node of a first network may send the multicast source information to the second root node by using a unicast routing protocol established between the user edge node and the second root node. In response, the second root node receives the multicast source information through a communication interface of the second root node. The first network is a network on which the multicast source is located. For detailed descriptions of the first network and the user edge node of the first network, refer to the foregoing descriptions. Details are not described again.

Optionally, after obtaining the multicast source information, the second root node may obtain the route prefix of the multicast source based on the multicast source information, and generate a local route including the route prefix.

It should be understood that, after obtaining the multicast source information from the multicast source, the user edge node of the first network may also send the multicast source information to a communication interface of the first root node by using a unicast protocol. Correspondingly, the first root node obtains the multicast source information through the communication interface of the first root node. Optionally, after obtaining the multicast source information from the user edge node of the first network, the first root node may obtain the route prefix of the multicast source based on the multicast source information, and generate the local route including the route prefix.

It should be noted that an IP network segment of the communication interface that is of the first root node and that is for obtaining the multicast source information from the user edge node of the first network may be the same as or different from an IP network segment of the communication interface that is of the second root node and that is for obtaining the multicast source information from the user edge node of the first network. This is not limited in this embodiment of this application. In addition, the user edge node that is of the first network and that sends the multicast source information to the first root node and the user edge node that is of the first network and that sends the multicast source information to the second root node may be a same user edge node (the user edge node a shown in FIG. 1), or may be different user edge nodes (the user edge node a1 and the user edge node a2 shown in FIG. 2). This is not limited herein.

In an example, with reference to FIG. 1, if the first network is the first network shown in FIG. 1, the user edge node of the first network is the user edge node a shown in FIG. 1. In this way, after obtaining multicast source information from the multicast source, the user edge node a may separately send the multicast source information to the root node 111 and the root node 112 by using a unicast protocol. In response, the root node 111 and the root node 112 obtain the multicast source information through respective communication interfaces. An IP network segment of the communication interface for obtaining the multicast source information by the root node 111 and an IP network segment of the communication interface for obtaining the multicast source information by the root node 112 may be the same or different.

As another example, with reference to FIG. 2, if the first network is the first network shown in FIG. 2, user edge nodes of the first network are the user edge node a1 and the user edge node a2 shown in FIG. 1. In this way, after obtaining multicast source information from the multicast source, the user edge node a1 may send the multicast source information to the root node 111 by using a unicast protocol. After obtaining the multicast source information from the multicast source, the user edge node a2 may send the multicast source information to the root node 112 by using a unicast protocol. In response, the root node 111 and the root node 112 obtain the multicast source information through respective communication interfaces. An IP network segment of the communication interface for obtaining the multicast source information by the root node 111 and an IP network segment of the communication interface for obtaining the multicast source information by the root node 112 may be the same or different.

After the second root node obtains the multicast source information, the second root node further obtains the first flag. The first flag indicates to determine, through negotiation, a node (that is, corresponding to a forwarding node in this embodiment of this application) that forwards a multicast packet. Optionally, the first flag may be configured in the second root node by the developer when the developer configures the multicast network architecture. In this way, the second root node may directly read the preconfigured first flag.

Further, the second root node generates the first information based on the obtained multicast source information and the read first flag, and sends the first information to the first root node. In response, the first root node receives the first information sent by the second root node.

Optionally, an information format of the first information may be upstream multicast hop (upstream multicast hop, UMH) routing information. In this case, a network layer reachability information (network layer reachability information, NLRI) key (key) in the first information includes the multicast source information, and an extended attribute field of the first information includes a border gateway protocol (border gateway protocol, BGP) attribute field/BGP community attribute field/BGP extended community attribute field that is used to carry the first flag. For example, the first flag is carried in the BGP extended community attribute field. The BGP extended community attribute field includes eight bytes, and values that may be represented by the eight bytes include 0 to (2⁶⁴-1). In this embodiment of this application, an unoccupied value may be applied from the values of 0 to (2⁶⁴-1) to carry the first flag. The unoccupied value in the values of 0 to (2⁶⁴-1) is a value that is not occupied by a currently existing protocol application in the values of 0 to (2⁶⁴-1).

Optionally, the first information may further include a first identifier of the second root node. In this case, if the information format of the first information is UMH routing information, a virtual routing forwarding route import extended community (virtual routing forwarding route import extended community, VRI) field of the first information may be used to carry the first identifier of the second root node. The first identifier of the second root node is used to mark the second root node, and is used by the first root node to determine, from the first root node and the second root node, the node configured to forward the multicast packet. In an example, the first identifier of the second root node may be a loopback address (Loopback Address) of the second root node. The loopback address may be an address based on internet protocol version 4 (internet protocol version 4, IPv4), or may be an address based on internet protocol version 6 (internet protocol version 6, IPv6). This is not limited herein.

Optionally, when the information format of the first information is UMH routing information, an NLRI key in the first information further includes a route distinguisher (route distinguisher, RD) of the second root node. The RD of the second root node is used to identify the second root node in a route.

For example, the foregoing multicast source information is the route prefix of the multicast source. (a) in FIG. 5 shows a diagram of a structure of the NLRI key in the first information when the information format of the first information is the UMH routing information. As shown in (a) in FIG. 5, the NLRI key of the first information includes the RD of the second root node and the route prefix IP prefix that is of the multicast source and that is obtained by the second root node from the user edge node of the first network.

It should be noted that, in a process in which the second root node sends the first information to the first root node, the first information may be forwarded by a route reflector. Therefore, to ensure that in a process in which the second root node sends the first information to the first root node, the first information can be distinguished from routing information sent by another root node in the multicast network architecture (for example, second information sent by the first root node to the second root node in the following) and is not filtered out by the route reflector, so that the first root node can receive the first information, the RD of the second root node and an RD of the another root node (for example, the first root node) in the multicast network architecture should be configured as different RDs. In this way, the NLRI key of the first information is different from an NLRI key of the routing information sent by the another root node, so that the route reflector may determine the first information and the routing information sent by the another root node as different routing information, and normally forward the different routing information.

However, in actual, RDs of nodes belonging to a same virtual private network (virtual private network, VPN) are usually set to a same value, that is, the RDs of the nodes in the same VPN are only different from RDs of nodes in another VPN. The root nodes in the multicast network architecture belong to a same MVPN. Therefore, the RD of the second root node and the RD of the another root node in the multicast network architecture are usually set to a same value. In this case, an information format of the first information sent by the second root node and an information format of the routing information sent by the another root node may be extended UMH routing information.

Specifically, when the information format of the first information sent by the second root node is the extended UMH routing information, in addition to the RD of the second root node, the NLRI key of the first information further includes a second identifier of the second root node. The second identifier of the second root node is used to distinguish routing information sent by the second root node from the routing information sent by the another node. For example, the second identifier of the second root node may be the loopback address of the second root node. This is not limited herein. In this way, for root nodes configured with a same RD in the multicast network architecture, the NLRI key of the first information sent by the second root node is different from the NLRI key in the routing information sent by the another root node. In this way, the first information sent by the second root node may be distinguished from the routing information sent by the another root node. Further, when receiving the first information, the route reflector may distinguish the first information from the routing information sent by the another node, so that the first information is not filtered out, but is forwarded normally. In this way, it can be ensured that the first root node receives the first information sent by the second root node.

Optionally, the NLRI key in the extended UMH routing information may be carried by adding a new route type in an MVPN address family, or may be carried by adding a new BGP sub-address family. This is not limited herein.

For example, the multicast source information carried in the first information sent by the second root node is the route prefix IP prefix of the multicast source, and the second identifier of the second root node is the loopback address of the second root node. Refer to FIG. 5. (b) in FIG. 5 shows a diagram of a structure of the NLRI key in the first information when the information format of the first information is the extended UMH routing information. As shown in (b) in FIG. 5, the NLRI key in the first information includes the RD of the second root node, the route prefix IP prefix that is of the multicast source and that is obtained by the second root node from the user edge node of the first network, and the loopback address Loopback Address of the second root node.

S102: The first root node performs, based on the multicast source information and the first flag that are carried in the first information, an operation of determining, from the first root node and the second root node, the node that forwards the multicast packet.

Specifically, the first root node may determine, based on the first flag carried in the first information, that the operation of determining the node that forwards the multicast packet needs to be performed.

Further, the first root node determines, based on the multicast source information carried in the first information and multicast source information corresponding to the first root node, whether the operation of determining, from the first root node and the second root node, the node that forwards the multicast packet needs to be performed. The node that is in the first root node and the second root node and that is configured to forward the multicast packet is an IDF node. The multicast source information corresponding to the first root node is the multicast source information obtained by the first root node from the user edge node of the first network in S101, and the multicast source information corresponding to the second root node is the multicast source information obtained by the second root node from the user edge node of the first network in S 101.

Specifically, the first root node may first determine, based on the multicast source information carried in the first information, whether multicast source information that is obtained from the user edge node of the first network and that is the same as the multicast source information carried in the first information exists locally. If yes, it indicates that the multicast source information that is received by the first root node and that is obtained by the second root node from the user edge node of the first network and the multicast source information obtained by the first root node from the user edge node of the first network are the same. In this case, the first root node determines to perform the operation of determining, from the first root node and the second root node, the node that forwards the multicast packet.

Alternatively, the first root node may first determine, based on the multicast source information carried in the first information, the route prefix that is of the multicast source and that corresponds to the multicast source information. Then, the first root node determines whether a local route including the route prefix exists locally. If yes, it indicates that the route prefix corresponding to the multicast source information that is received by the first root node and that is obtained by the second root node from the user edge node of the first network and the route prefix corresponding to the multicast source information obtained by the first root node from the user edge node of the first network are the same. In this case, the first root node determines to perform the operation of determining, from the first root node and the second root node, the node that forwards the multicast packet. For a detailed specification of the local route that is of the first root node and that includes the route prefix, refer to the related description in S101. Details are not described again.

In a possible implementation, after receiving the first information and receiving a multicast join request sent by a downlink node of the first root node, the first root node may trigger to perform the operation of determining, from the first root node and the second root node based on the multicast source information and the first flag that are carried in the first information, the node that forwards the multicast packet. Specifically, after receiving the first information, when receiving the multicast join request sent by the downlink node, the first root node may determine whether a multicast source address carried in the multicast join request matches the multicast source information carried in the first information. When determining that the multicast source address carried in the multicast join request matches the multicast source information carried in the first information, the first root node further performs, based on the multicast source information and the first flag that are carried in the first information, the operation of determining, from the first root node and the second root node, the node that forwards the multicast packet. The downlink node of the first root node is a node close to a multicast receiver side. For example, it is assumed that the first root node is the root node 111 shown in FIG. 1 or FIG. 2. In this case, the downlink node of the first root node is the leaf node 12 shown in FIG. 1 or FIG. 2.

It should be noted that, after obtaining the multicast source information from the user edge node of the first network (specifically, as described in the related description in S101), the first root node may also obtain the first flag preconfigured by the first root node, generate second information based on the obtained multicast source information and the obtained first flag, and send the second information to the second root node. Optionally, the second information may further include a first identifier of the first root node.

For a detailed description of the first identifier of the first root node, refer to the foregoing detailed description of the first identifier of the second root node. For a detailed description of obtaining the multicast source information by the first root node, refer to the related description of S101. For a detailed description of obtaining the first flag by the first root node, refer to the foregoing description of obtaining the first flag by the second root node. Details are not described again. In addition, for a detailed description of an information format of the second information, refer to the foregoing description of the information format of the first information. For example, when the information format of the second information is UMH routing information, an NLRI key of the second information includes an RD of the first root node and the multicast source information, an extended attribute field of the second information includes a BGP attribute field/BGP community attribute field/BGP extended community attribute field that is used to carry the first flag, and a VRI field of the second information may be used to carry the first identifier of the first root node. When the information format of the second information is extended UMH routing information, in addition to the RD of the first root node, the NLRI key of the second information further includes a second identifier of the first root node. Herein, for a detailed description of the second identifier of the first root node, refer to the foregoing description of the second identifier of the second root node. Details are not described again.

Further, after receiving the second information, the second root node performs, based on the multicast source information and the first flag that are carried in the second information, an operation of determining, from the first root node and the second root node, the node that forwards the multicast packet. Herein, for a detailed description of an operation of determining, by the second root node from the first root node and the second root node based on the multicast source information and the first flag that are carried in the second information, the node that forwards the multicast packet, refer to the foregoing description of the operation of determining, by the first root node from the first root node and the second root node based on the multicast source information and the first flag that are carried in the first information, the node that forwards the multicast packet. Details are not described again.

In this way, when the first root node and the second root node respectively determine, from the first root node and the second root node according to a same rule, the node that forwards the multicast packet, it is equivalent to that an objective that the first root node and the second root node elect, through autonomous negotiation according to the same rule, the node that forwards the multicast packet is achieved.

Further, after S102, FIG. 6 is a schematic flowchart of a specific method for determining, by the first root node from the first root node and the second root node, the node that forwards the multicast packet according to an embodiment of this application. The method may include the following steps.

S103: The first root node obtains a sorting result based on the first identifier of the first root node and the first identifier that is of the second root node and that is carried in the first information.

Specifically, the first root node may sort the first identifier of the first root node and the first identifier that is of the second root node and that is carried in the first information, to obtain the sorting result.

Optionally, the first root node may sort the first identifier of the first root node and the first identifier of the second root node in ascending order, or the first root node may sort the identifier of the first root node and the identifier of the second root node in descending order. This is not limited herein.

In an example, the first identifier of the first root node is a loopback address 1.1.1.1 of the first root node, the first identifier of the second root node is a loopback address 2.2.2.2 of the second root node, and the first root node sorts the first identifier of the first root node and the first identifier of the second root node in ascending order. In this case, a sorting result of the first identifier of the first root node and the first identifier of the second root node is 1.1.1.1→2.2.2.2.

S104: The first root node determines, based on the sorting result, that the first root node is the node that forwards the multicast packet.

Specifically, the first root node determines, from the first root node and the second root node based on the sorting result, the first root node as the node that forwards the multicast packet.

Optionally, the first root node may determine, based on the sorting result from the first root node and the second root node, the first root node corresponding to an identifier with a largest ranking as the node that forwards the multicast packet. Alternatively, the first root node may determine, based on the sorting result from the first root node and the second root node, the first root node corresponding to an identifier with a smallest ranking as the node that forwards the multicast packet.

For example, the first identifier of the first root node is the loopback address 1.1.1.1 of the first root node, the first identifier of the second root node is the loopback address 2.2.2.2 of the second root node, the sorting result of the first identifier of the first root node and the first identifier of the second root node is 1.1.1.1→2.2.2.2, and the first root node determines the root node corresponding to the identifier with the smallest ranking in the sorting result as a forwarding node. In this case, the first root node may determine the first root node identified by the loopback address 1.1.1.1 as the node that forwards the multicast packet.

Similarly, for a process in which the second root node determines, from the first root node and the second root node, the node that forwards the multicast packet, refer to the descriptions of S103 and S104. Details are not described again. In this way, the node that is determined after the first root node performs S103 and S104 and that forwards the multicast packet and the node that is determined after the second root node performs S103 and S104 and that forwards the multicast packet are a same root node, and the node, serving as an IDF, forwards the multicast packet received from the multicast source to the leaf node, thereby achieving an objective that the first root node and the second root node elect, through autonomous negotiation, the node that forwards the multicast packet.

Optionally, after the first root node determines, based on the sorting result, that the first root node is the node that forwards the multicast packet, the first root node adds a packet forwarding flag to a multicast forwarding entry including a multicast source address that matches the multicast source information. In addition, after the second root node also determines, based on the sorting result, that the first root node is the node that forwards the multicast packet, the second root node does not add a packet forwarding flag or adds a packet not-forwarding flag to a multicast forwarding entry including a multicast source address that matches the multicast source information. In this way, when receiving a multicast packet that is from the multicast source and that matches the multicast source information, the first root node forwards the multicast packet according to an indication of the multicast forwarding entry. When receiving a multicast packet that is from the multicast source and that matches the multicast source information, the second root node does not forward the multicast packet according to an indication of the multicast forwarding entry.

In other words, after both the first root node and the second root node determine that the forwarding node is the first root node, after the first root node and the second root node receive the multicast packet from the multicast source, the first root node, serving as an IDF node, in the first root node and the second root node forwards the received multicast packet to the leaf node (for example, sends the received multicast packet to the leaf node through a provider tunnel (Provider Tunnel, P-Tunnel) between the forwarding node and the leaf node). When the first root node is connected to a local multicast receiver, the first root node further forwards the received multicast packet to the local multicast receiver. However, for the second root node serving as a non-IDF node, when the second root node is connected to a local multicast receiver, the second root node only needs to forward the received multicast packet to the local multicast receiver.

It should be understood that the method in S103 and S104 is applicable to a scenario in which the first root node and the second root node forward the multicast packet from the multicast source to a same multicast group, and is also applicable to a scenario in which the first root node and the second root node forward the multicast packet from the multicast source to a plurality of multicast groups.

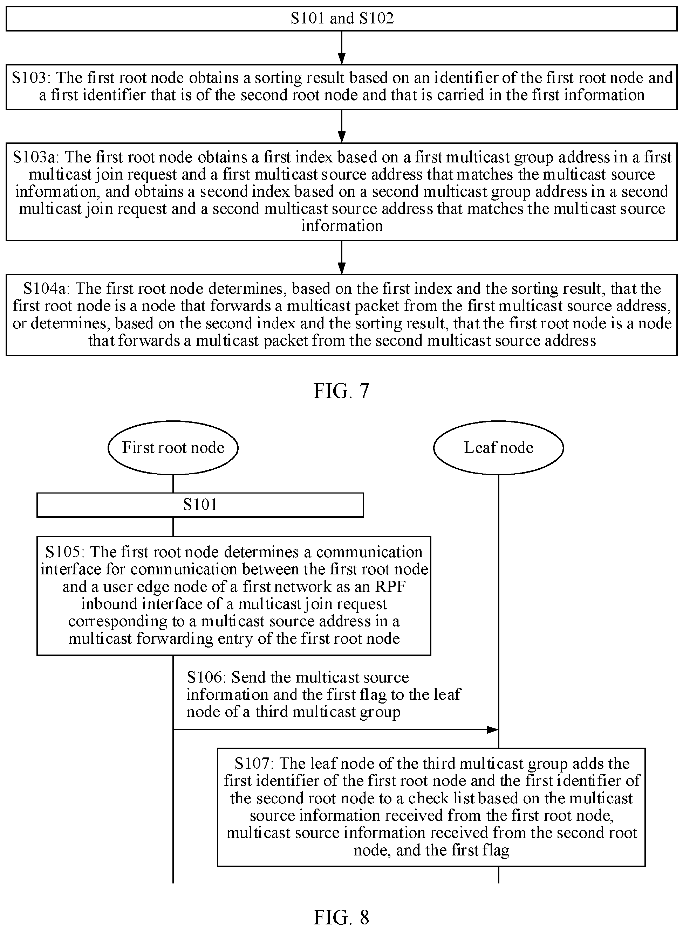

In some possible embodiments, when the first root node and the second root node can forward the multicast packet from the multicast source to the plurality of multicast groups, that is, the first root node and the second root node record a plurality of multicast forwarding entries of a plurality of groups of matched multicast source addresses and group addresses, the multicast source addresses in the plurality of multicast forwarding entries all match the multicast source information in S 101, and the multicast group addresses in the plurality of multicast forwarding entries are different. In this case, refer to FIG. 7. In the node determining method provided in this embodiment of this application, a forwarding node may be determined at a fine granularity based on different multicast groups that receive multicast packets. Specifically, as shown in FIG. 7, before or after the first root node performs S103, the first root node performs the following steps.

S103a: The first root node obtains a first index based on a first multicast group address in a first multicast join request and a first multicast source address that matches the multicast source information, and obtains a second index based on a second multicast group address in a second multicast join request and a second multicast source address that matches the multicast source information.

The first multicast join request is a multicast join request received by the first root node from another root node, a leaf node, or a local multicast receiver that communicates with the first root node, and the first multicast join request includes the first multicast group address and the first multicast source address. For example, the first multicast join request includes (S1, G1).

The second multicast join request is a multicast join request received by the second root node from another root node, a leaf node, or a local multicast receiver that communicates with the second root node, and the second multicast join request includes the second multicast group address and the second multicast source address. For example, the second multicast join request includes (S2, G2).

The first multicast group address and the second multicast group address are different. The first multicast group address is used to receive a multicast packet from the first multicast source address (the multicast packet from the first multicast source address (or referred to as a first multicast source) may be referred to as a first multicast stream), and the second multicast group address is used to receive a multicast packet from the second multicast source address (the multicast packet from the second multicast source address (or referred to as a second multicast source) may be referred to as a second multicast stream). Both the first multicast source address and the second multicast source address match the multicast source information described in S101, and the first multicast source address and the second multicast source address may be the same or different. This is not limited herein. When the first multicast source address and the second multicast source address are different, multicast source route prefixes that respectively correspond to the first multicast source address and the second multicast source address and that are respectively on the first root node and on the second root node are the same.

Optionally, the first root node may calculate the first multicast source address and the first multicast group address according to a preset hash algorithm, to obtain the first index. Similarly, the first root node may calculate the second multicast source address and the second multicast group address according to a preset hash algorithm, to obtain the second index. The hash algorithm used to calculate the first index and the hash algorithm used to calculate the second index are a same hash algorithm. A specific hash algorithm is not limited in this embodiment of this application.

For example, the first multicast join request includes (S1, G1), and the second multicast join request includes (S2, G2). The first root node calculates (S1, G1) according to the preset hash algorithm, and may obtain that a value of the first index is 1. The first root node calculates (S2, G2) according to the preset hash algorithm, and may obtain that a value of the first index is 2.

It may be understood that when S103a is performed after S103, the first root node further performs S104a (that is, S104a is replaced with S104). When S103a is performed before S103, the first root node further performs S103, and then performs S104a (that is, replaces S104 with S104a).

S104a: The first root node determines, based on the first index and the sorting result, that the first root node is a node that forwards a multicast packet from the first multicast source address, or determines, based on the second index and the sorting result, that the first root node is a node that forwards a multicast packet from the second multicast source address.

The sorting result is a sorting result obtained by sorting the identifier of the first root node and the identifier of the second root node in S103.

Specifically, a correspondence between the first index and the sorting result and a correspondence between the second index and the sorting result may be preset on the first root node. For example, the correspondences are that the first index corresponds to an identifier with a largest ranking in the sorting result, and the second index corresponds to an identifier with a smallest ranking in the sorting result. For another example, the correspondences are that the first index corresponds to an identifier with a smallest ranking in the sorting result, and the second index corresponds to an identifier with a largest ranking in the sorting result.

In this way, the first root node may determine, based on the correspondence between the first index and the sorting result, the first root node marked by an identifier corresponding to the first index in the sorting result as the node configured to forward the multicast packet from the first multicast source address, or determine, based on the correspondence between the second index and the sorting result, the first root node marked by an identifier corresponding to the second index in the sorting result as the node configured to forward the multicast packet from the second multicast source address.

In an example, it is assumed that the first root identifier of the first root node is a loopback address 1.1.1.1 of the first root node, and the first root identifier of the second root node is a loopback address 2.2.2.2 of the second root node, and a sorting result of the first root identifier of the first root node and the first root identifier of the second root node is 1.1.1.1→2.2.2.2. In this case, the first root node determines that an index of (S1, G1) is the first index, and a value is 1, and the first root node further determines that an index of (S1, G2) is the second index, and a value is 2. When the first index value 1 corresponds to a smallest identifier 1.1.1.1 in the sorting result, and the second index value 2 corresponds to a largest identifier 2.2.2.2 in the sorting result, the first root node determines the first root node marked by the identifier 1.1.1.1 as a node configured to forward a multicast packet from S1, and determines the second root node marked by the identifier 2.2.2.2 as a node configured to forward a multicast packet from S2. Alternatively, when the first index value 1 corresponds to a largest identifier 2.2.2.2 in the sorting result, and the second index value 2 corresponds to a smallest identifier 1.1.1.1 in the sorting result, the first root node determines the second root node marked by the identifier 2.2.2.2 as a node configured to forward a multicast packet from S1, and determines the first root node marked by the identifier 1.1.1.1 as a node configured to forward a multicast packet from S2.

Optionally, after the first root node determines that the first root node is the node that forwards the multicast packet from the first multicast source address, and determines that the second root node is the node that forwards the multicast packet from the second multicast source address, the first root node may add a forwarding flag to a first multicast forwarding entry generated based on the first multicast join request, to indicate the first root node to forward the multicast packet according to an indication of the first multicast forwarding entry after subsequently receiving the multicast packet from the first multicast source. In addition, the first root node does not add a forwarding flag or adds a packet not-forwarding flag to a second multicast forwarding entry generated based on the second multicast join request. In this way, after receiving the multicast packet from the second multicast source, the first root node does not forward the packet according to an indication of the second forwarding entry.

Similarly, for a process in which the second root node determines, from the first root node and the second root node, the node that forwards the multicast packet, refer to the descriptions of S103 and S104a. Details are not described again.

In this way, after the first root node and the second root node respectively determine the first root node as the node that forwards the first multicast stream and determine the second root node as the node that forwards the second multicast stream, after the first root node and the second root node receive the first multicast stream, the first root node, serving as an IDF of the first multicast stream, forwards the received first multicast stream to a leaf node corresponding to the first multicast group (for example, sends the received first multicast stream to the leaf node through a P-Tunnel between the first root node and the leaf node). When both the first root node and the second root node are connected to local multicast receivers, the first root node further forwards the received first multicast stream to the local multicast receiver of the first root node, and the second root node only needs to forward the received first multicast stream to the local multicast receiver. Similarly, after the first root node and the second root node receive the second multicast stream, the second root node, serving as an IDF of the second multicast stream, forwards the received second multicast stream to a leaf node corresponding to the second multicast group (for example, sends the received second multicast stream to the leaf node through a P-Tunnel between the second root node and the leaf node), and forwards the received second multicast stream to the local multicast receiver of the second root node. The first root node only needs to forward the received second multicast stream to the local multicast receiver. The leaf node corresponding to the first multicast group and the leaf node corresponding to the second multicast group may be a same leaf node, or may be different leaf nodes in the multicast network architecture. This is not limited herein.

It can be learned that, according to the method in S103 and S104a, the first root node and the second root node forward multicast packets forwarded to different multicast groups through load sharing. In this way, a problem that link congestion may be caused when all multicast packets are forwarded via one root node can be avoided.

In some possible embodiments, to ensure that after the first root node and the second root node determine the node that forwards the multicast packet, both the first root node and the second root node can determine the multicast packet that is received from the user edge node of the first network and that is from the multicast source as a valid packet, and when a root node, serving as an IDF, in the first root node and the second root node forwards the received multicast packet to the leaf node, the leaf node may determine the multicast packet received from the first root node or the second root node as a valid packet, refer to FIG. 8. After performing S101, the first root node performs S105.

S105: The first root node determines a communication interface for communication between the first root node and the user edge node of the first network as an RPF inbound interface of the multicast join request corresponding to the multicast source address in the multicast forwarding entry of the first root node.

It can be learned from the description in the foregoing technical terms that the multicast forwarding entry is generated based on the multicast join request, and the multicast source address in the multicast forwarding entry is the multicast source address carried in the multicast join request. Therefore, the multicast join request corresponding to the multicast source address in the multicast forwarding entry is a multicast join request that carries the multicast source address. The RPF inbound interface of the multicast join request is an interface for receiving a multicast packet requested to be received by the multicast join request.

Specifically, after the first root node receives the first information and determines, from the first root node and the second root node, the node that needs to forward the multicast packet, the first root node may determine that the first root node only needs to receive the multicast packet from the user edge node of the first network. Further, when the first root node determines that the multicast source address in the multicast forwarding table matches the multicast source information obtained by the first root node from the user edge node of the first network, the first root node determines the communication interface for communication between the first root node and the user edge node of the first network as the RPF inbound interface of the multicast join request corresponding to the multicast source address in the multicast forwarding entry of the first root node. Optionally, the multicast join request corresponding to the multicast source address in the multicast forwarding entry of the first root node may be a multicast join request that is forwarded by the leaf node to the first root node and that is from the multicast receiver, or may be a multicast join request sent by the local multicast receiver of the first root node to the first root node. The communication interface for communication between the first root node and the user edge node of the first network is an interface through which the first root node obtains the multicast source information from the user edge node of the first network.

In an example, after the first root node determines that the node that forwards the multicast packet needs to be selected from the first root node and the second root node, if the multicast source address in the multicast forwarding entry of the first root node is 10.1.1.1, the multicast source information obtained by the first root node from the user edge node of the first network is a route prefix 10.1.1.0/24 of the multicast source, and an interface address for obtaining 10.1.1.0/24 by the first root node from the user edge node of the first network is 192.168.1.1/24. Because 10.1.1.1 matches 10.1.1.0/24, the first root node determines 192.168.1.1/24 as an RPF inbound interface of the multicast join request corresponding to the multicast source address 10.1.1.1 in the multicast forwarding entry of the first root node.

Similarly, the second root node may also determine a communication interface for communication between the second root node and the user edge node of the first network as an RPF inbound interface of the multicast join request corresponding to the multicast source address in the multicast forwarding entry of the second root node. For a detailed description of determining, by the second root node, the communication interface for communication between the second root node and the user edge node of the first network as the RPF inbound interface of the multicast join request corresponding to the multicast source address in the multicast forwarding entry of the second root node, refer to the description of "determining, by the first root node, the communication interface for communication between the first root node and the user edge node of the first network as the RPF inbound interface of the multicast join request corresponding to the multicast source address in the multicast forwarding entry of the first root node". Details are not described again.

In this way, both the first root node and the second root node may subsequently receive the multicast packet that is from the multicast source identified by the multicast source information and that is forwarded by the user edge node of the first network, and determine the received multicast packet as a valid packet.

In this way, in S105, it can be ensured that the first root node and the second root node can receive, from the user edge node of the first network, the multicast packet from the multicast source identified by the multicast source information, and determine the multicast packet as the valid packet.

It should be noted that a sequence of performing S103 and S104 (or S103 and S104a), and S105 is not limited in this embodiment of this application. For example, in this embodiment of this application, S103 and S104 (or S103 and S104a) may be first performed, and then S105 is performed. Alternatively, in this embodiment of this application, S103 and S104 (or S103 and S104a), and S105 may be simultaneously performed. This is not limited thereto.

S106: The first root node sends the multicast source information and the first flag to a leaf node of a third multicast group.

Specifically, when the first root node determines, in S103 and S104 (or S103 and S104a), that the first root node is a node that forwards a multicast packet from a third multicast source, the first root node sends the multicast source information and the first flag to the leaf node of the third multicast group. Herein, the multicast source information can identify the third multicast source. Alternatively, it may be understood that the multicast source information matches an address of the third multicast source. For example, the third multicast source may be the foregoing first multicast source, or may be the foregoing second multicast source. This is not limited. The third multicast group is a multicast group that matches the third multicast source and that is used to receive the multicast packet from the third multicast source. The leaf node of the third multicast group is a leaf node on a communication link between the third multicast source and the third multicast group. It may be understood that the multicast packet that is from the third multicast source and that is received by the third multicast group may be referred to as a third multicast stream.

Multicast source information sent by the first root node to the leaf node of the third multicast group is the multicast source information obtained by the first root node from the user edge node of the first network described in S101. The first flag sent by the first root node to the leaf node of the third multicast group is the first flag described in S101. Details are not described again.

After receiving the first information sent by the second root node and determining, based on the first information, that the first root node is the node that forwards the third multicast stream, the first root node may send the multicast source information and the first flag to the leaf node of the third multicast group. Optionally, after receiving the first information sent by the second root node, and determining, based on the first information, that the first root node is the node that forwards the third multicast stream, the first root node may also send, to the leaf of the third multicast group, the route prefix that is of the multicast source and that corresponds to the multicast source information and the first flag that are carried in the first information. This is not limited herein. For a detailed description of the route prefix that is of the multicast source and that corresponds to the multicast source information, refer to the foregoing description. Details are not described again.

A message that includes the multicast source information and the first flag and that is sent by the first root node to the leaf node of the third multicast group further carries the first identifier of the first root node. For a description of the identifier of the first root node, refer to the foregoing description. Details are not described again.

Optionally, when the first identifier of the first root node is an IPv6-based loopback address of the first root node, the first root node further sends an attribute distinguisher of the first root node to the leaf node of the third multicast group. For example, the message that includes the multicast source information and the first flag and that is sent by the first root node to the leaf node of the third multicast group carries the attribute distinguisher of the first root node. The attribute distinguisher of the first root node corresponds to the IPv6-based loopback address of the first root node. Specifically, the attribute distinguisher of the first root node is a 4-byte value configured for the IPv6-based loopback address of the first root node, so that the attribute distinguisher of the first root node may be used to represent the IPv6-based loopback address of the first root node. For example, the attribute distinguisher configured for the IPv6-based loopback address of the first root node is 0x01010101.

Similarly, after receiving the second information sent by the first root node and determining, based on the second information, that the first root node is the node that forwards the third multicast stream, the second root node may also send the multicast source information and the first flag to the leaf node of the third multicast group. The message that includes the multicast source information and the first flag and that is sent by the second root node to the leaf node of the third multicast group may further carry the first identifier of the second root node. Optionally, when the first identifier of the second root node is an IPv6-based loopback address of the second root node, the second root node further sends an attribute distinguisher of the second root node to the leaf node. For example, the message that includes the multicast source information and the first flag and that is sent by the second root node to the leaf node of the third multicast group carries the attribute distinguisher of the second root node. For a description of the attribute distinguisher of the second root node, refer to the description of the attribute distinguisher of the first root node. Details are not described again. For example, the attribute distinguisher configured for IPv6-based loopback address of the second root node is 0x02020202.

The attribute distinguisher of the root node is used to distinguish between multicast join requests sent by the leaf node to the root node. For example, the attribute distinguisher of the first root node is used to distinguish between multicast join requests sent by the leaf node of the third multicast group to the first root node. For another example, the attribute distinguisher of the second root node is used to distinguish between multicast join requests sent by the leaf node of the third multicast group to the second root node.

Specifically, when the leaf node of the third multicast group sends the received multicast join request to the first root node and the second root node, if the leaf node determines that the leaf node and the first root node belong to a same autonomous system (autonomous system, AS), the leaf node fills a number of the AS in which the leaf node and the first root node are located in a source AS (Source AS) field of the multicast join request sent to the first root node. When the leaf node determines that the leaf node and the first root node do not belong to a same AS, the leaf node fills the attribute distinguisher, for example, 0x01010101, corresponding to the IPv6-based loopback address of the first root node in the source AS field of the multicast join request sent to the first root node. Similarly, if the leaf node determines that the leaf node and the second root node belong to a same AS, the leaf node fills a number of the AS in which the leaf node and the second root node are located in a source AS field of the multicast join request sent to the second root node. When the leaf node determines that the leaf node and the second root node do not belong to a same AS, the leaf node fills the attribute distinguisher, for example, 0x02020202, corresponding to the IPv6-based loopback address of the second root node in the source AS field of the multicast join request sent to the second root node.

In this way, when the leaf node of the third multicast group and the root node are not in the same AS, it indicates that the multicast join request sent by the leaf node to the root node needs to be transmitted across ASs. Attribute distinguishers of root nodes are filled in source AS fields of multicast join requests transmitted by the leaf node to different root nodes (for example, the first root node and the second root node) across ASs, so that the multicast join requests sent by the leaf node to the different root nodes across the ASs can be distinguished between.

It should be noted that a sequence of performing S103 and S104 (or S103 and S104a), S105, and S106 is not limited in this embodiment of this application. For example, in this embodiment of this application, S103 and S104 (or S103 and S104a) may be first performed, then S105 is performed, and finally S106 is performed. Alternatively, in this embodiment of this application, S103 and S104 (or S103 and S104a), S105, and S106 may be simultaneously performed. This is not limited thereto.

S107: The leaf node of the third multicast group adds the first identifier of the first root node and the first identifier of the second root node to a check list based on the multicast source information received from the first root node, the multicast source information received from the second root node, and the first flag.

Specifically, when the leaf node of the third multicast group determines that the multicast source information (or the route prefix of the multicast source) received from the first root node and the same multicast source information (or the route prefix of the same multicast source) received from the second root node are the same, and match the address of the third multicast source in the local multicast forwarding entry, and the leaf node further receives the first flag sent by the first root node and the second root node, the leaf node may determine that the first root node and the second root node are two root nodes that forward the multicast packet from the third multicast source, and the two root nodes elect, through autonomous negotiation, the node configured to forward the multicast packet. In this case, it indicates that the leaf node may receive, from the first root node, the multicast packet from the third multicast source, or may receive, from the second root node, the multicast packet from the third multicast source. Therefore, the leaf node may add both the first identifier of the first root node and the first identifier of the second root node to the check list, where the check list is the foregoing anycast-RPF check list. For a detailed description of the anycast-RPF check list, refer to the description of the technical terms. Details are not described again.

In this way, when subsequently receiving the multicast packet sent by the first root node or the second root node, the leaf node of the third multicast group may determine whether an identifier of the root node that forwards the multicast packet exists in the check list. If yes, the leaf node determines that the received multicast packet is a valid packet, and forwards, according to the local multicast forwarding table, the multicast packet that is determined as the valid packet to a node that communicates with the leaf node. The node is, for example, a user edge node of a network (the second network shown in FIG. 1 or FIG. 2) on which a multicast receiver of the third multicast group is located, and the user edge node forwards the received multicast packet to a multicast receiver connected to the user edge node.

In some possible examples, when the leaf node of the third multicast source receives the multicast join request, the multicast source address carried in the multicast join request matches the route prefix corresponding to the multicast source information received by the leaf node from the first root node, and matches the route prefix corresponding to the multicast source information received by the leaf node from the second root node, and the leaf node further receives the first flag sent by the first root node and the second root node, the first root node and the second root node of the leaf node are two root nodes that forward the multicast packet corresponding to the multicast join request, and the two root nodes elect, through autonomous negotiation, the node configured to forward the multicast packet. Further, the leaf node adds both the first identifier of the first root node and the first identifier of the second root node to the anycast-RPF check list, so that when subsequently receiving the multicast packet sent by the first root node or the second root node, the leaf node determines the received multicast packet as a valid packet, and forwards, according to the local multicast forwarding table, the multicast packet that is determined to be the valid packet to the user edge node or the local multicast receiver of the second network connected to the leaf node.

In this way, in S106 and S107, it can be ensured that the leaf node determines the multicast packet that is received from the first root node or the second root node and that is from the third multicast source as a valid packet.

In this way, in the method described in S101 to S107, in a scenario in which both the first root node and the second root node can receive the multicast packet sent by the user edge node of the network on which the third multicast source is located, and the IP network segment of the communication interface for communication between the first root node and the user edge node of the network on which the third multicast source is located and the IP network segment of the communication interface for communication between the second root node and the user edge node of the network on which the third multicast source is located are not limited, the first root node and the second root node can elect, through autonomous negotiation, the node configured to forward the multicast packet. In addition, according to the method, it can be ensured that the first root node and the second root node receive the multicast packet only from the user edge node of the network on which the third multicast source is located. Therefore, after the user edge node of the network on which the third multicast source is located sends the multicast packet from the third multicast source to the first root node and the second root node, a node, serving as an IDF, in the first root node and the second root node can forward the received multicast packet to the leaf node of the third multicast group.

In addition, according to the foregoing method, the first root node and the second root node can trigger the leaf node of the third multicast group to enable the anycast-RPF check function (that is, add the first identifier of the first root node and the first identifier of the second root node to the anycast-RPF check list) for the multicast packet that is forwarded by the first root node and the second root node and that is from the third multicast source, and a user does not need to manually access and enable the anycast-RPF check function of the leaf node of the third multicast group, thereby improving user experience.

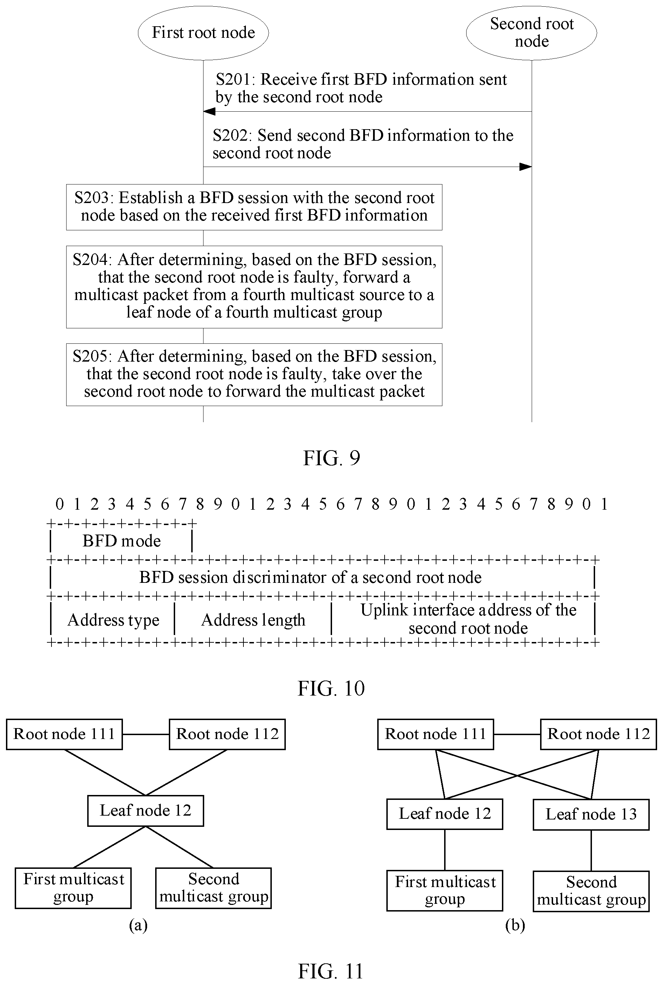

In some other possible embodiments, after the first root node and the second root node determine, by performing the method S101 to S104 (or S104a), the node that forwards the multicast packet to the leaf node, when the root node (that is, the root node serving as the IDF) that forwards the multicast packet to the leaf node is faulty, or a communication link between the root node that forwards the multicast packet to the leaf node and the user edge node of the first network is faulty, to ensure continuity of multicast packet forwarding, a function of the faulty root node should be switched to the other node in a timely manner. To achieve this objective, FIG. 9 shows another node determining method according to an embodiment of this application. Optionally, the method may be applied to the architecture 10 shown in FIG. 1 or FIG. 2, and is performed by the root node and the leaf node that are in the architecture 10 and that have the hardware structure shown in FIG. 3. The method may include the following steps.

S201: A first root node receives first bidirectional forwarding detection (bidirectional forwarding detection, BFD) information sent by a second root node.

Specifically, the first BFD information (corresponding to the BFD information in this embodiment of this application) sent by the second root node to the first root node includes a BFD session discriminator of the second root node and an interface address of the second root node.

The interface address of the second root node is an interface address used by the second root node to communicate with a user edge node of a first network, and the interface address may be an IPv4 address or an IPv6 address. This is not limited herein.

The first root node may establish a BFD session between the first root node and the second root node based on the first BFD information received from the second root node, where the BFD session is used to detect a fault of the first root node or the second root node. The BFD session is a BFD session for a service in which the first root node or the second root node forwards a multicast packet. Therefore, the BFD session discriminator of the second root node is a BFD session discriminator set by the second root node for the service.

The fault of the first root node includes a fault of the first root node, and/or a fault of an interface for communication between the first root node and the user edge node of the first network, a fault of a communication link between the first root node and the user edge node of the first network, and/or the like. The fault of the second root node includes a fault of the second root node, and/or a fault of an interface for communication between the second root node and the user edge node of the first network, a fault of a communication link between the second root node and the user edge node of the first network, and/or the like. This is not limited.

Optionally, the first BFD information further includes BFD mode (BFD mode) information, address type (type) information, address length (length) information, and the like. This is not limited herein. The BFD mode information indicates that the BFD session is a BFD session between two nodes, and the address type information indicates an address type that is of the interface address of the second root node and that is included in the first BFD information, for example, the interface address is an IPv4 address or an IPv6 address. The address length information indicates a length that is of the interface address of the second root node and that is included in the first BFD information.

In an example, FIG. 10 is an example of a diagram of a structure of first BFD information according to an embodiment of this application. As shown in FIG. 10, 1^{st} to 8^{th} bits of the first BFD information are used to record BFD mode information. 33^{rd} to 64^{th} bits of the first BFD information are used to record a BFD session discriminator of the second root node. 65^{th} to 72^{nd} bits of the first BFD information are used to record address type information of an interface address of the second root node, 73^{rd} to 80^{th} bits of the first BFD information are used to record a length of the interface address of the second root node, and 81^{st} to 96^{th} bits of the first BFD information are used to record the interface address of the second root node.

Optionally, the second root node may send the first BFD information to the first root node after sending the foregoing first information to the first root node. Alternatively, the second root node sends both the foregoing first information and the first BFD information to the first root node.

In a possible implementation, the foregoing first information sent by the second root node to the first root node includes the first BFD information. This is not limited herein.

In response, the first root node receives the first BFD information sent by the second root node.

S202: The first root node sends second BFD information to the second root node.

The second BFD information includes a BFD session discriminator of the first root node and an interface address of the first root node. For a detailed description of the second BFD information, refer to the description of the first BFD information. Details are not described again.

Optionally, the first root node may send the second BFD information to the second root node after sending the foregoing second information to the second root node. Alternatively, the first root node sends both the foregoing second information and the second BFD information to the second root node. In a possible implementation, the foregoing second information sent by the first root node to the second root node includes the second BFD information. This is not limited herein.

In response, the second root node receives the second BFD information sent by the first root node.

It may be understood that a sequence of performing S201 and S202 by the first root node is not limited in this embodiment of this application. For example, the first root node may first perform S201, and then perform S202. Alternatively, the first root node may simultaneously perform S201 and S202. This is not limited thereto.

S203: The first root node establishes the BFD session with the second root node based on the received first BFD information.

Optionally, after the first root node is determined as a node that forwards a multicast packet based on the method in S103 and S104, it indicates that the first root node is used as a primary root node in the first root node and the second root node, and the second root node is a secondary root node in the first root node and the second root node. In this case, the first root node initiates and establishes the BFD session with the second root node based on the received first BFD information.

It may be understood that, the first root node receives the first BFD information, that is, learns of BFD-related information of the second root node (for example, the BFD session discriminator of the second root node and the interface address of the second root node). Similarly, the second root node receives the second BFD information, that is, learns of BFD-related information of the first root node (for example, the BFD session discriminator of the first root node and the interface address of the first root node). Further, the first root node may initiate a process of establishing the BFD session with the second root node, to establish the BFD session with the second root node. A process in which the first root node initiates and establishes the BFD session with the second root node is not described in detail in this embodiment of this application.

In an example, the first root node is root1, the BFD session discriminator of the first root node is represented by a my discriminator (my discriminator, MD) and a value of the MD is 11, the interface address of the first root node is 192.168.1.1, the second root node is root2, the session discriminator of the second root node is represented by a your discriminator (your discriminator, YD) and a value of the YD is 22, and the interface address of the second root node is 192.168.2.1. Refer to Table 1. BFD session information of the BFD session established by the first root node with the second root node is shown in Table 1.

**Table 1**

| Communication direction | Destination IP | Source IP | MD | YD |
|---|---|---|---|---|
| Root1→Roo2 | 192.168.2.1 | 192.168.1.1 | 11 | 22 |
| Root2→Roo1 | 192.168.1.1 | 192.168.2.1 | 22 | 11 |

S204: After determining, based on the BFD session, that the second root node is faulty, the first root node forwards a multicast packet from a fourth multicast source to a leaf node of a fourth multicast group.

The fourth multicast source and the fourth multicast group are a pair of matched multicast source and multicast group. For example, the fourth multicast source may be the foregoing first multicast source, or may be the foregoing second multicast source. This is not limited herein. It may be understood that the multicast packet that is from the fourth multicast source and that is received by the fourth multicast group may be referred to as a fourth multicast stream.

When the first root node determines, in S103 and S104 (or S103 and S104a), that the second root node is a node that forwards the multicast packet from the fourth multicast source, and the first root node is a non-IDF node, the first root node may detect the fault of the second root node based on the BFD session, and when detecting that the second root node is faulty, forward the multicast packet from the fourth multicast source to the leaf node of the fourth multicast group. In other words, the first root node switches a function of forwarding, by the second root node, the multicast packet from the fourth multicast source to the leaf node of the fourth multicast group to the first root node.

Specifically, after the BFD session between the first root node and the second root node is established, the first root node and the second root node may periodically send BFD detection packets to each other. Period duration of sending the BFD detection packets between the first root node and the second root node is not specifically limited in this embodiment of this application.

When the first root node does not receive, within one or a preset quantity of periods, the BFD detection packet sent by the second root node, the first root node determines that the second root node is faulty. Further, the first root node forwards the multicast packet from the fourth multicast source to the leaf node of the fourth multicast group. Optionally, when the first root node has a local multicast receiver, the first root node further forwards the multicast packet from the fourth multicast source to the local multicast receiver. In addition, because a first identifier of the first root node is in an anycast-RPF check list of the leaf node of the fourth multicast group (refer to the description of the anycast-RPF check list of the leaf node of the third multicast group), the leaf node of the fourth multicast group may determine that the multicast packet received from the first root node is a valid packet. Therefore, the leaf node of the fourth multicast group may forward the multicast packet that is received from the fourth multicast source and that is from the first root node to a user edge node of a network on which the multicast receiver is located.

Similarly, when the first root node determines, in S103 and S104 (or S103 and S104a), that the first root node is a node that forwards the multicast packet from the fourth multicast source, and the second root node is a non-IDF node, after determining, based on the BFD session, that the first root node is faulty, the second root node forwards the multicast packet from the fourth multicast source to the leaf node of the fourth multicast group. In other words, the second root node switches a function of forwarding, by the first root node, the multicast packet from the fourth multicast source to the leaf node of the fourth multicast group to the second root node. Details are not described again.

S205: After determining, based on the BFD session, that the second root node is faulty, the first root node takes over the second root node to forward the multicast packet.

In a possible case, when the first root node determines, in S103 and S 104a, that the first root node is a node that forwards a multicast packet from the first multicast source, and determines that the second root node is a node that forwards a multicast packet from the second multicast source, and when the first root node determines, based on the BFD session, the fault of the second root node, the first root node, as an IDF, further forwards the multicast packet from the second multicast source to a leaf node of a second multicast group in addition to forwarding the multicast packet from the first multicast source to a leaf node of a first multicast group. In other words, in addition to implementing a function of forwarding the multicast packet from the first multicast source to the leaf node of the first multicast group, the first root node further takes over the second root node to implement a function of forwarding the multicast packet from the second multicast source to the leaf node of the second multicast group. The leaf node of the second multicast group is a leaf node that communicates with a multicast receiver of the second multicast group.

In another possible case, when the first root node determines, in S103 and S104a, that the first root node is a node that forwards a multicast packet from the second multicast source, and determines that the second root node is a node that forwards a multicast packet from the first multicast source, and when the first root node determines, based on the BFD session, the fault of the second root node, the first root node, as an IDF, further forwards the multicast packet from the first multicast source address to a leaf node of a first multicast group in addition to forwarding the multicast packet from the second multicast source to a leaf node of a second multicast group. In other words, in addition to implementing a function of forwarding the multicast packet from the second multicast source to the leaf node of the second multicast group, the first root node further takes over the second root node to implement a function of forwarding the multicast packet from the first multicast source to the leaf node of the first multicast group. The leaf node of the first multicast group is a leaf node that communicates with a multicast receiver of the first multicast group.

For a detailed description of determining, by the first root node, the fault of the second root node based on the BFD session, refer to the description of detecting the fault of the root node based on the BFD session in S204. Details are not described again. The leaf node of the first multicast group and the leaf node of the second multicast group may be a same leaf node, or may not be a same leaf node. This is not limited.

In an example, FIG. 11 is a diagram of a leaf node of a first multicast group and a leaf node of a second multicast group. As shown in (a) in FIG. 11, both a root node 111 and a root node 112 are connected to and communicate with a leaf node 12, and the leaf node 12 separately communicates with the first multicast group and the second multicast group. In this case, the leaf node of the first multicast group and the leaf node of the second multicast group are a same leaf node, that is, the leaf node 12. As shown in (b) in FIG. 11, a root node 111 is separately connected to and communicates with a leaf node 12 and a leaf node 13, and a root node 112 is also separately connected to and communicates with the leaf node 12 and the leaf node 13. The leaf node 12 communicates with the first multicast group, and the leaf node 13 communicates with the second multicast group. In this case, the leaf node of the first multicast group and the leaf node of the second multicast group are not a same leaf node. For example, as shown in (b) in FIG. 11, the leaf node of the first multicast group is the leaf node 12, and the leaf node of the second multicast group is the leaf node 13.

Similarly, the second root node may also detect the fault of the first root node based on the BFD session, and when the first root node is faulty, take over the first root node to forward the multicast packet. For a detailed description, refer to the description of "after determining, based on the BFD session, that the second root node is faulty, the first root node takes over the second root node to forward the multicast packet". Details are not described again.

In this way, according to the method described in S205, when the first root node and the second root node forward, through negotiation, the multicast packet in a load sharing manner, when one root node determines, based on a BFD session, that the other root node is faulty, a multicast packet forwarded by the other root node may be forwarded by the one root node that is not faulty, thereby ensuring continuity of multicast packet forwarding.

It can be learned that, according to the method described in S201 to S205, after the first root node and the second root node determine, through autonomous negotiation, the node configured to forward the multicast packet, fault switching may be further performed between the first root node and the second root node by using a BFD detection mechanism, thereby ensuring continuity of multicast packet forwarding and improving user experience.

In some possible examples, three or more root nodes are configured in a multicast network architecture provided in this application. To further describe the method provided in this embodiment of this application, the following describes, with reference to an example, a node determining method in an active mode provided in this embodiment of this application when three root nodes are configured in a multicast network architecture.

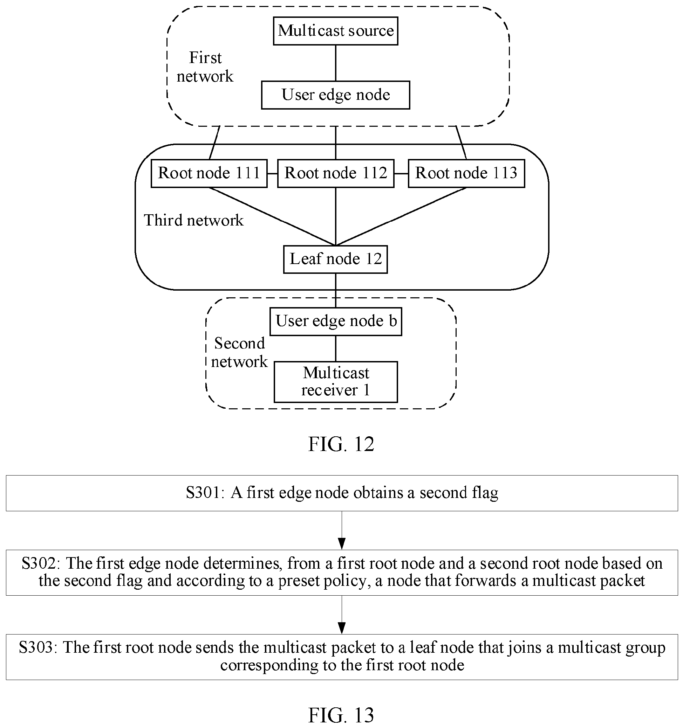

With reference to FIG. 1 and FIG. 2, FIG. 12 is a diagram of still another multicast network architecture. As shown in FIG. 12, a third network includes a root node 111, a root node 112, a root node 113, and a leaf node 12. The root node 111, the root node 112, and the root node 113 communicate with a user edge node of a first network. It should be noted that the root node 111, the root node 112, and the root node 113 may communicate with different user edge nodes on the first network, or may communicate with a same user edge node on the first network. This is not limited herein. In addition, interface addresses that are of the root node 111, the root node 112, and the root node 113 and that are used to communicate with the user edge node on the first network may belong to a same IP network segment, or may not belong to a same IP network segment. This is not limited herein.

Based on the multicast network architecture shown in FIG. 12, it is assumed that a first identifier of the root node 111 is a loopback address 1.1.1.1, an interface address for communication between the root node 111 and the user edge node of the first network is 192.168.1.1, a first identifier of the root node 112 is a loopback address 2.2.2.2, an interface address for communication between the root node 112 and the user edge node of the first network is 192.168.2.1, a first identifier of the root node 113 is a loopback address 3.3.3.3, and an interface address for communication between the root node 113 and the user edge node of the first network is 192.168.3.1, the foregoing multicast source information is a route prefix of a multicast source, and the route prefix of the multicast source shown in FIG. 12 is 10.1.1.0/24. After obtaining the route prefix 10.1.1.0/24 of the multicast source from the user edge node of the first network, the root node 111 generates information 1 including 10.1.1.0/24, a first flag, and the first identifier 1.1.1.1 of the root node 111, and sends the information 1 to the root node 112 and the root node 113. In response, the root node 112 and the root node 113 separately receive the information 1 sent by the root node 111. For a specific description of receiving, by the root node 112, the information 1 sent by the root node 111 and receiving, by the root node 113, the information 1 sent by the root node 111, refer to the foregoing description of receiving, by the first root node, the first information sent by the second root node in S101. For the first flag, refer to the foregoing description. Details are not described again.

Similarly, after obtaining the route prefix 10.1.1.0/24 of the multicast source from the user edge node of the first network, the root node 112 generates information 2 including 10.1.1.0/24, the first flag, and the first identifier 2.2.2.2 of the root node 112, and sends the information 2 to the root node 111 and the root node 113. In response, the root node 111 and the root node 113 separately receive the information 2 sent by the root node 112. After obtaining the route prefix 10.1.1.0/24 of the multicast source from the user edge node of the first network, the root node 113 generates information 3 including 10.1.1.0/24, the first flag, and the first identifier 3.3.3.3 of the root node 113, and sends the information 3 to the root node 111 and the root node 112. In response, the root node 111 and the root node 112 separately receive the information 3 sent by the root node 112.

After receiving the information 2 sent by the root node 112 and the information 3 sent by the root node 113, the root node 111 determines that the route prefixes that are of the multicast source and that are carried in the information 2 and the information 3 are the same, and further determines that the root node 111 also obtains the route prefix from the user edge node of the first network. In this case, the root node 111 determines, according to an indication of the first flag, the first identifier 1.1.1.1 of the root node 111, the first identifier 2.2.2.2 of the root node 112, and the first identifier 3.3.3.3 of the root node 113 from the root node 111, the root node 112, and the root node 113, that a node that forwards a multicast packet is the root node 111. For a specific process, refer to the foregoing description of determining the forwarding node in the first root node and the second root node in S103 and S104. Details are not described again.

Similarly, after receiving the information 1 sent by the root node 111 and the information 3 sent by the root node 113, the root node 112 determines, from the root node 111, the root node 112, and the root node 113, that the node that forwards the multicast packet is the root node 111. After receiving the information 1 sent by the root node 111 and the information 2 sent by the root node 112, the root node 113 determines, from the root node 111, the root node 112, and the root node 113, that the node that forwards the multicast packet is the root node 111.

The information 1 sent by the root node 111 to another root node may further carry BFD information 1, where the BFD information 1 includes a BFD session discriminator of the root node 111 and an interface address 192.168.1.1 of the root node 111. For a specific description, refer to the foregoing description of the first BFD information. Details are not described again. Similarly, the information 2 sent by the root node 112 to another root node may further carry BFD information 2, where the BFD information 2 includes a BFD session discriminator of the root node 112 and an interface address 192.168.2.1 of the root node 112. The information 3 sent by the root node 113 to another root node may further carry BFD information 3, where the BFD information 3 includes a BFD session discriminator of the root node 113 and an interface address 192.168.3.1 of the root node 113.

In this way, after the root node 111 determines that the node that forwards the multicast packet is the root node 111, it is equivalent to that the root node 111 determines that the root node 111 is a primary root node, and the root node 111 may further determine a secondary root node from the root node 112 and the root node 113. For a process of determining the secondary root node, refer to the description of determining the node that forwards the multicast packet in S103 and S104. For example, the root node 111 may determine that the root node 112 whose first identifier is 2.2.2.2 is the secondary root node, and the root node 113 is a sub-secondary root node. Certainly, the root node 111 may also randomly determine one root node from the root node 112 and the root node 113 as the secondary root node, and the other root node is the sub-secondary root node. Similarly, the root node 112 and the root node 113 separately perform a process similar to that performed by the root node 111, to determine a primary root node, a secondary root node, and a sub-secondary root node from the root node 111, the root node 112, and the root node 113.

Further, the root node 111 may initiate and establish a BFD session with the root node 112 (that is, the primary root node initiates and establishes a BFD session with the secondary root node) based on the BFD information 2 carried in the received information 2. In this way, when the root node 112 detects, based on the BFD session between the root node 112 and the root node 111, that the root node 111 is faulty, the root node 112 switches the root node 112 as the node that forwards the multicast packet (refer to S204 and S205). Further, the root node 112 may determine, from the root node 112 and the root node 113, that the node that forwards the multicast packet is the root node 112 based on the descriptions of S103 and S104. In this way, instant switching is implemented when the node that forwards the multicast packet is faulty, thereby ensuring continuity of forwarding the multicast packet. The root node 113 may determine, based on a BGP session with the root node 111, that the root node 111 is faulty, and determine, from the root node 112 and the root node 113, that the node that forwards the multicast packet is the root node 112. When the foregoing secondary root node is not the root node 112, after determining that the root node 112 is the node that forwards the multicast packet, the root node 112 switches the root node 112 as the node that forwards the multicast packet.

In some possible examples, after the root node 111 initiates and establishes the BFD session with the root node 112 (that is, the primary root node initiates and establishes the BFD session with the secondary root node) based on the BFD information 2 carried in the received information 2, when the root node 111 detects that the root node 112 is faulty based on the BFD session, the root node 111 initiates and establishes a BFD session with the root node 113 (that is, the primary root node initiates and establishes a BFD session with the sub-secondary root node) based on the BFD information 3 carried in the received information 3, so that when the root node 111 is faulty, a function of forwarding the multicast packet is immediately switched to the root node 113. Details are not described again.

The root node 111 further matches a multicast source address in a local multicast forwarding entry with the route prefix 10.1.1.0/24 of the multicast source, and determines that the received information 2 and the received information 3 include the first flag. In this case, the root node 111 determines the interface 192.168.1.1 for communication between the root node 111 and the user edge node of the first network as an RPF inbound interface of a multicast join request corresponding to the multicast source address. Similarly, the root node 112 further matches a multicast source address in a local multicast forwarding entry with the route prefix 10.1.1.0/24 of the multicast source, and determines that the received information 1 and the received information 3 include the first flag. In this case, the root node 112 determines the interface 192.168.2.1 for communication between the root node 112 and the user edge node of the first network as an RPF inbound interface of a multicast join request corresponding to the multicast source address. The root node 113 further matches a multicast source address in a local multicast forwarding entry with the route prefix 10.1.1.0/24 of the multicast source, and determines that the received information 1 and the received information 2 include the first flag. In this case, the root node 113 determines the communication interface 192.168.3.1 for communication between the root node 113 and the user edge node of the first network as an RPF inbound interface of a multicast join request corresponding to the multicast source address. For a detailed description, refer to the description of S105. Details are not described again.

The root node 111 further sends the route prefix 10.1.1.0/24 of the multicast source, the first flag, and the first identifier 1.1.1.1 of the root node 111 to the leaf node 12, the root node 112 further sends the route prefix 10.1.1.0/24 of the multicast source, the first flag, and the first identifier 2.2.2.2 of the root node 112 to the leaf node 12, and the root node 113 further sends the route prefix 10.1.1.0/24 of the multicast source, the first flag, and the first identifier 3.3.3.3 of the root node 113 to the leaf node 12. Further, when the leaf node determines that the route prefix that is of the multicast source and that is received from the root node 111, the route prefix that is of the multicast source and that is received from the root node 112, and the route prefix that is of the multicast source and that is received from the root node 113 are the same, and receives the first flag from the root node 111, the root node 112, and the root node 113, the leaf node 12 may determine that the root node 111, the root node 112, and the root node 113 are three root nodes used to forward the multicast packet sent by the multicast source with the route prefix 10.1.1.0/24, and the three root nodes elect, through autonomous negotiation, the node configured to forward the multicast packet, to indicate that the leaf node 12 may receive the multicast packet from any one of the three root nodes. Further, the leaf node 12 adds the first identifier 1.1.1.1 of the root node 111, the first identifier 2.2.2.2 of the root node 112, and the first identifier 3.3.3.3 of the root node 113 to an anycast-RPF check list, so that the multicast packet subsequently received by the leaf node 112 from the root node 111, the root node 112, or the root node 113 is determined as a valid packet, and the multicast packet determined as the valid packet is forwarded to the user edge node b of the second network shown in FIG. 12 according to the multicast forwarding table, and then the user edge node b may forward the received multicast packet to a multicast receiver connected to the user edge node b. For detailed descriptions, refer to the descriptions of S106 and S 107. Details are not described again.

FIG. 13 is a schematic flowchart of another node determining method according to an embodiment of this application. The method may be a node determining method in a passive mode. Optionally, the method may be applied to the user edge node of the first network on which the multicast source is located and the root node of the second network shown in FIG. 1. The user edge node and the root node have the hardware structure shown in FIG. 3. The method may include the following steps.

S301: A first edge node obtains a second flag.

The first edge node is a user edge node of a network on which a multicast source is located, for example, the user edge node a shown in FIG. 1. Optionally, the first edge node may include an Eth-Trunk interface. The Eth-Trunk interface includes a first interface for communicating with a first root node and a second interface for communicating with a second root node.

The second flag indicates a node that is determined to forward a multicast packet. Specifically, the second flag indicates to determine, from the first root node and the second root node, a node that forwards a multicast packet. The node that forwards the multicast packet is configured to receive a multicast packet sent by the first edge node, and forward the received multicast packet to a leaf node. However, for one node that is in the first root node and the second root node and that is not selected as a node that forwards the multicast packet, the first edge node does not forward the multicast packet to the node. Optionally, the node that forwards the multicast packet may alternatively forward the multicast packet sent by the first edge node to the node that is in the first root node and the second root node and that does not receive the multicast packet sent by the first edge node, so that the root node forwards the received multicast packet to a local multicast receiver.

Both the first root node and the second root node are network-side edge nodes that are on the third network and that communicate with the first edge node in embodiments of this application, for example, the root node 111 and the root node 112 shown in FIG. 1. The leaf node is a network-side edge node that is on the third network in this embodiment of this application and that communicates with a user edge node of a network on which the multicast receiver is located, for example, the leaf node 12 shown in FIG. 1.

Optionally, the second flag may be configured on the first edge node by the developer when the developer configures the network. In this way, the first edge node may directly read the preconfigured second flag.

S302: The first edge node determines, from the first root node and the second root node based on the second flag and according to a preset policy, the node that forwards the multicast packet.

The preset policy includes: randomly selecting, from the first root node and the second root node, the node configured to forward the multicast packet; or selecting, from the first root node and the second root node according to a load balancing algorithm, the node configured to forward the multicast packet.

Optionally, the first edge node may determine a target interface from the first interface and the second interface. In this way, the first edge node may use a root node that communicates with the target interface as the node that forwards the multicast packet.

Optionally, the first edge node may randomly determine the target interface from the first interface and the second interface, to randomly determine, from the first root node and the second root node, the node that forwards the multicast packet.

Optionally, the first edge node may determine, from the first interface and the second interface according to a load balancing rule, the target interface for forwarding multicast packets to different multicast groups, to determine, from the first root node and the second root node according to the load balancing rule, the node configured to forward the multicast packets to the different multicast groups. For example, for matched first multicast source address and first multicast group address (S1, G1), the first edge node may determine, according to a hash algorithm that can implement load balancing, an interface for forwarding the multicast packet (S1, G1) as the first interface, so that the first root node that communicates with the first interface is determined as a node that forwards the multicast packet (S1, G1). For matched second multicast source address and second multicast group address (S2, G2), the first edge node may determine, according to a hash algorithm that can implement load balancing, an interface for forwarding the multicast packet (S2, G2) as the second interface, so that the second root node that communicates with the second interface is determined as a node that forwards the multicast packet (S2, G2).

S303: The first root node sends the multicast packet to a leaf node that joins a multicast group corresponding to the first root node.

When the first edge node determines, based on the second flag and according to the preset policy, the first root node in the first root node and the second root node as the node that forwards the multicast packet, the first root node receives the multicast packet sent by the first edge node, and sends the multicast packet to the leaf node that joins the multicast group corresponding to the first root node.

The multicast group corresponding to the first root node is a multicast group address in a multicast forwarding entry of the first root node, and a multicast source address that matches the multicast group address in the multicast forwarding entry matches multicast source information obtained by the first root node from the first edge node. Further, the leaf node that joins the multicast group corresponding to the first root node is a leaf node that forwards the multicast packet to a multicast receiver in the multicast group.

In this way, after the first edge node determines, in the first root node and the second root node by using the method described in S301 and S302, that the node that forwards the multicast packet is the first root node, when receiving the multicast packet, the first edge node may forward the received multicast packet to the first root node, but does not forward the received multicast packet to the second root node. Further, the first root node may forward the received multicast packet to the leaf node of the multicast group corresponding to the first root node (for example, forward the multicast packet to the leaf node through a P-Tunnel between the first root node and the leaf node). Optionally, the first root node may further forward the received multicast packet to the second root node that does not receive the multicast packet forwarded by the first edge node (for example, forward the multicast packet to the second root node through a P-Tunnel between the first root node and the second root node). Further, the leaf node of the multicast group corresponding to the first root node may forward the received multicast packet to the local multicast receiver and the user edge node (for example, the user edge node b shown in FIG. 1) of the network on which the multicast receiver of the multicast group is located, and the second root node may forward the received multicast packet to the local multicast receiver.

It can be learned that the method described in S301 to S303 can support a scenario in which the user edge node of the network on which the multicast source is located performs IDF selection among a plurality of root nodes connected to the user edge node.

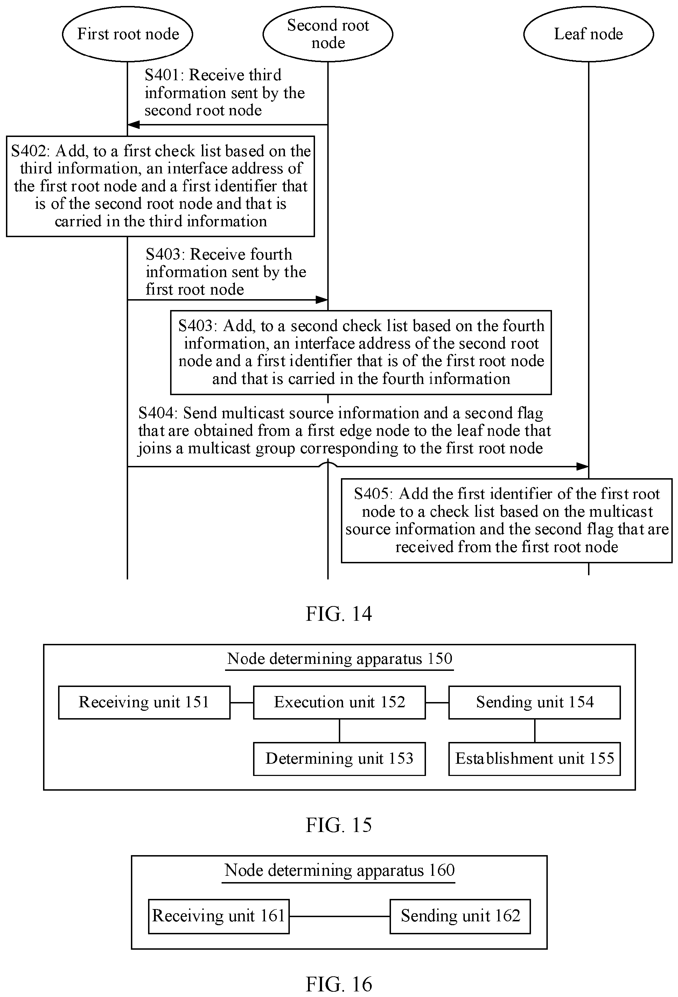

It can be learned from S301 to S303 that, when the first edge node determines, from the first root node and the second root node, the node that forwards the multicast packet, the first root node may receive the multicast packet sent by the first edge node or the second root node, the second root node may receive the multicast packet sent by the first edge node or the first root node, and the leaf node may receive the multicast packet sent by the first root node or the second root node. Therefore, in some possible embodiments, to ensure that the first root node determines the multicast packet sent by the first edge node or the second root node as a valid packet, the second root node determines the multicast packet sent by the first edge node or the first root node as a valid packet, and the leaf node determines the multicast packet sent by the first root node or the second root node as a valid packet, refer to FIG. 14. Before S301 and S302, the first root node, the second root node, and the leaf node further separately perform the following steps.

S401: The first root node receives third information sent by the second root node.

The third information includes multicast source information, a second flag, and a first identifier of the second root node, where the multicast source information is obtained by the second root node from the first edge node through a communication interface of the second root node. For a detailed description, refer to the description of S101. For a description of the first identifier of the second root node, refer to the related description of S101. For a detailed description of the second flag, refer to the description of S301. Details are not described again.

Optionally, the second flag may be configured in the second root node by the developer when the developer configures a network. Therefore, the second root node may directly read the preconfigured second flag.

Further, the second root node generates the third information based on the obtained multicast source information, the obtained second flag, and the first identifier of the second root node, and sends the generated third information to the first root node. In response, the first root node receives the third information sent by the second root node. For a description of an information format of the third information, refer to the description of the information format of the first information in S101. For a description of a field that carries the second flag in the third information, refer to the description of the field that carries the first flag in S101. Details are not described again.

S402: The first root node adds, to a first check list based on the third information, an interface address of the first root node and the first identifier that is of the second root node and that is carried in the third information.

The interface address of the first root node is an address of an interface for communication between the first root node and the first edge node. The first check list is an anycast-RPF check list recorded in the first root node. For a detailed description of the Anycast-RPF check list, refer to the foregoing description. Details are not described herein again.

Specifically, when the first root node determines that the third information carries the second flag, and determines that the multicast source information carried in the third information has been obtained from the first edge node in advance through an interface of the first root node (or the first root node determines that a route prefix that is of a multicast source and that corresponds to the multicast source information carried in the third information has been obtained from the first edge node in advance through an interface of the first root node), the first root node adds the interface address of the multicast source information obtained by the first root node from the first edge node and the identifier of that is of the second root node and that is carried in the first information to the first check list.

In some possible implementations, when the first root node determines that a multicast source address in a local multicast forwarding entry matches the multicast source information carried in the third information, determines that the multicast source information carried in the third information has been obtained from the first edge node in advance through an interface of the first root node, and determines that the third information carries the second flag, the first root node adds the interface address of the first root node and the first identifier that is of the second root node and that is carried in the first information to the first check list.

In this way, when the first root node subsequently receives, through the foregoing interface, a multicast packet sent by the first edge node, or receives a multicast packet from the second root node, the first root node may determine, based on the first check list, that all multicast packets received from the first edge node or the second root node are valid packets.

S403: The second root node receives fourth information sent by the first root node, and adds, to a second check list based on the fourth information, an interface address of the second root node and a first identifier that is of the first root node and that is carried in the fourth information.

The interface address of the second root node is an address of an interface for communication between the second root node and the first edge node. The second check list is an anycast-RPF check list recorded in the second root node. For a detailed description of the Anycast-RPF check list, refer to the foregoing description. Details are not described herein again.

Specifically, the first root node may obtain the multicast source information from the first edge node, and obtain the second flag pre-configured on the first root node. Further, the first root node may generate the fourth information based on the obtained multicast source information, the second flag, and the identifier of the first root node, and send the fourth information to the second root node.

In response, the second root node receives the fourth information sent by the first root node. For a description of an information format of the fourth information, refer to the description of the information format of the first information in S101. For a description of a field that carries the second flag in the fourth information, refer to the description of the field that carries the first flag in S101. Details are not described again.

Further, the second root node adds, to the second check list based on the fourth information, the interface address of the second root node and the first identifier that is of the first root node and that is carried in the fourth information. Herein, for a detailed description of adding, by the second root node, to the second check list based on the fourth information, the interface address of the second root node and the first identifier that is of the first root node and that is carried in the fourth information, refer to the description of "the first root node adds, to the first check list based on the third information, the interface address of the first root node and the first identifier that is of the second root node and that is carried in the third information" in S402. Details are not described again.

It should be noted that a sequence of performing S401 and S402, and S403 is not specifically limited in this embodiment of this application. For example, in this embodiment of this application, S401 and S402 may be first performed, and then S403 is performed. Alternatively, in this embodiment of this application, S401 and S402, and S403 may be simultaneously performed. This is not limited thereto.

In this way, in S401 to S403, it can be ensured that the first root node determines the multicast packet received by the first edge node or the second root node as a valid packet, and it can be ensured that the second root node determines the multicast packet received by the first edge node or the first root node as a valid packet.

S404: The first root node sends the multicast source information and the second flag that are obtained from the first edge node to a leaf node that joins a multicast group corresponding to the first root node.

For a description of the leaf node that joins the multicast group corresponding to the first root node, refer to related descriptions of S302. Details are not described again.

Optionally, a message that includes the multicast source information and the second flag that are obtained from the first edge node and that is sent by the first root node to the leaf node that joins the multicast group corresponding to the first root node further carries the first identifier of the first root node.

S405: The leaf node adds the first identifier of the first root node to a check list based on the multicast source information and the second flag that are received from the first root node.

Specifically, when the leaf node receives the second flag from the first root node, it indicates that the leaf node may receive the multicast packet from the first root node. Therefore, when the multicast source information received by the leaf node from the first root node matches the multicast source address in the local multicast forwarding entry, the leaf node adds the first identifier of the first root node to the check list, so that the leaf node determines that the multicast packet that is from the first root node and matches the multicast source information is a valid packet.

Similarly, the second root node may also send the multicast source information and the second flag that are obtained from the first edge node to a leaf node that joins a multicast group corresponding to the second root node. The leaf node that joins the multicast group corresponding to the second root node and the leaf node that joins the multicast group corresponding to the first root node may be a same leaf node, or may be different leaf nodes.

Optionally, the message that includes the multicast source information and the second flag that are obtained from the first edge node and that is sent by the second root node to the leaf node that joins the multicast group corresponding to the second root node further carries the first identifier of the second root node.

Further, the leaf node adds the first identifier of the second root node to the check list based on the multicast source information and the second flag that are received from the second root node, so that the leaf node determines that the multicast packet that is from the second root node and matches the multicast source information is a valid packet. For a detailed description, refer to the description of "the leaf node adds the first identifier of the first root node to the check list based on the multicast source information and the second flag that are received from the first root node". Details are not described again.

In some examples, when the leaf node that joins the multicast group corresponding to the first root node and the leaf node that joins the multicast group corresponding to the second root node are a same leaf node, the leaf node determines that the multicast source information received from the first root node and the multicast source information received from the second root node are the same, and match the multicast source address in the local multicast forwarding entry of the leaf node, the leaf node adds both the first identifier of the first root node and the identifier of the second root node to the check list, so that the leaf node determines that the multicast packets that are from the first root node and the second root node and that match the multicast source information are valid packets.

It should be noted that a sequence of performing S401 and S402, S403, and S404 and S405 is not specifically limited in this embodiment of this application. For example, in this embodiment of this application, S401 and S402 may be first performed, then S403 is performed, and finally S04 and S405 are performed. Alternatively, in this embodiment of this application, S401 and S402, S403, and S404 and S405 may be simultaneously performed. This is not limited thereto.

In this way, in S404 and S405, it can be ensured that the leaf node determines the multicast packet received from the first root node and/or the second root node as a valid packet.

In this way, in S401 to S405, when the first edge node determines, in the first root node and the second root node according to the preset policy, a node that forwards a multicast packet, it is ensured that the first root node can determine the multicast packets received by the first edge node and the second root node as valid packets, and it is ensured that the second root node can determine the multicast packets received by the first edge node and the first root node as valid packets.

In addition, in S404 and S405, the first root node and the second root node can trigger the leaf node to enable an anycast-RPF check function (that is, add the first identifier of the first root node and the first identifier of the second root node to the anycast-RPF check list) for the multicast packets forwarded by the first root node and the second root node, and a user does not need to manually access and enable the anycast-RPF check function of the leaf node, thereby improving user experience.

In some possible examples, three or more root nodes are configured in a multicast network architecture provided in this application. To further describe the method provided in this embodiment of this application, the following describes, with reference to an example, a node determining method in a passive mode provided in this embodiment of this application when three root nodes are configured in a multicast network architecture.

With reference to FIG. 12, in this example, the root node 111, the root node 112, and the root node 113 shown in FIG. 12 separately communicate with a same user edge node (for example, the first edge node) on the first network. Optionally, the first edge node includes an Eth-Trunk interface, and the Eth-Trunk interface includes an interface 1 for communicating with the root node 111, an interface 2 for communicating with the root node 112, and an interface 3 for communicating with the root node 113. In addition, interface addresses used by the root node 111, the root node 112, and the root node 113 for separately communicating with the first edge node belong to a same IP network segment.

Based on the multicast network architecture shown in FIG. 12, it is assumed that a first identifier of the root node 111 is a loopback address 1.1.1.1, an interface address for communication between the root node 111 and the interface 1 of the first edge node is 192.168.1.1, a first identifier of the root node 112 is a loopback address 2.2.2.2, an interface address for communication between the root node 112 and the interface 2 of the first edge node is 192.168.2.1, a first identifier of the root node 113 is a loopback address 3.3.3.3, an interface address for communication between the root node 113 and the interface 3 of the first edge node is 192.168.3.1, the foregoing multicast source information is a route prefix of a multicast source, and the route prefix of the multicast source shown in FIG. 12 is 10.1.1.0/24. After obtaining the route prefix 10.1.1.0/24 of the multicast source from the first edge node, the root node 111 generates information 1 including 10.1.1.0/24, a second flag, and a first identifier 1.1.1.1 of the root node 111, and sends the information 1 to the root node 112 and the root node 113. In response, the root node 112 and the root node 113 separately receive the information 1 sent by the root node 111. For a specific description of receiving, by the root node 112, the information 1 sent by the root node 111 and receiving, by the root node 113, the information 1 sent by the root node 111, refer to the foregoing description of receiving, by the first root node, the third information sent by the second root node in S401. For the second flag, refer to the foregoing description. Details are not described again.

After obtaining the route prefix 10.1.1.0/24 of the multicast source from the first edge node, the root node 112 generates information 2 including 10.1.1.0/24, the second flag, and a first identifier 2.2.2.2 of the root node 112, and sends information 2 to the root node 111 and the root node 113. In response, the root node 111 and the root node 113 separately receive the information 2 sent by the root node 112. After obtaining the route prefix 10.1.1.0/24 of the multicast source from the first edge node, the root node 113 generates information 3 including 10.1.1.0/24, the second flag, and a first identifier 3.3.3.3 of the root node 113, and sends the information 3 to the root node 111 and the root node 112. In response, the root node 111 and the root node 112 separately receive the information 3 sent by the root node 112.

After receiving the information 2 sent by the root node 112 and the information 3 sent by the root node 113, the root node 111 determines that the route prefix that is of the multicast source and that is carried in the information 2 and the route prefix that is of the multicast source and that is carried in the information 3 are the same, the root node 111 has received the route prefix from the first edge node in advance, and the root node 111 determines that the information 2 and the information 3 carry the second flag. In this case, the root node 111 adds, to an anycast-RPF check list of the root node 111, the interface 192.168.1.1 used by the root node 111 for communicating with the first edge node, the first identifier 2.2.2.2 that is of the root node 112 and that is carried in the information 2, and the first identifier 3.3.3.3 that is of the root node 113 and that is carried in the information 3. For a detailed description, refer to S402. Details are not described again. Similarly, the root node 112 may add, to an anycast-RPF check list of the root node 112, the interface 192.168.2.1 used by the root node 112 for communicating with the first edge node, the first identifier 1.1.1.1 that is of the root node 111 and that is carried in the information 1, and the first identifier 3.3.3.3 that is of the root node 113 and that is carried in the information 3. The root node 113 may add, to an anycast-RPF check list of the root node 113, the interface 192.168.3.1 used by the root node 113 for communicating with the first edge node, the first identifier 1.1.1.1 that is of the root node 111 and that is carried in the information 1, and the first identifier 2.2.2.2 that is of the root node 112 and that is carried in the information 2. Details are not described again. Further, for the root node 111, the root node 111 may determine, based on the anycast-RPF check list of the root node 111, all the multicast packets forwarded by the first edge node, the root node 112, and the root node 113 as valid packets. Similarly, for the root node 112, the root node 112 may determine, based on the anycast-RPF check list of the root node 112, all the multicast packets forwarded by the first edge node, the root node 111, and the root node 113 as valid packets. For the root node 113, the root node 113 may determine, based on the anycast-RPF check list of the root node 113, all the multicast packets forwarded by the first edge node, the root node 111, and the root node 112 as valid packets.

The root node 111 further sends the route prefix 10.1.1.0/24 of the multicast source, the first identifier 1.1.1.1 of the root node 111, and the second flag to the leaf node 12, the root node 112 further sends the route prefix 10.1.1.0/24 of the multicast source, the first identifier 2.2.2.2 of the root node 112, and the second flag to the leaf node 12, and the root node 113 further sends the route prefix 10.1.1.0/24 of the multicast source, the first identifier 3.3.3.3 of the root node 113, and the second flag to the leaf node 12. Further, when the leaf node determines that the route prefix that is of the multicast source and that is received from the root node 111, the route prefix that is of the multicast source and that is received from the root node 112, and the route prefix that is of the multicast source and that is received from the root node 113 are the same, and all match the multicast source address in the local multicast forwarding entry, the leaf node may determine that the root node 111, the root node 112, and the root node 113 are three root nodes configured to forward the multicast packet sent by the multicast source with the route prefix 10.1.1.0/24, and then the leaf node adds the first identifier 1.1.1.1 of the root node 111, the first identifier 2.2.2.2 of the root node 112, and the first identifier 3.3.3.3 of the root node 113 to the anycast-RPF check list, so that the leaf node 112 subsequently determines the received multicast packet from the multicast source with the route prefix 10.1.1.0/24 and sent by the root node 111, the root node 112, or the root node 113 as a valid packet, and forwards, according to the multicast forwarding table, the multicast packet determined as the valid packet to the user edge node b of the second network shown in FIG. 12. Therefore, the user edge node b may forward the received multicast packet to a multicast receiver connected to the user edge node b. For detailed descriptions, refer to the descriptions of S106 and S107. Details are not described again.

After the root node 111, the root node 112, the root node 113, and the leaf node 12 configure respective anycast-RPF check lists, the first edge node may determine, from the root node 111, the root node 112, and the root node 113 based on the locally preconfigured second flag and according to the preset policy, the node that forwards the multicast packet. For a specific description, refer to S302. Details are not described again. Further, after the first edge node determines, from the root node 111, the root node 112, and the root node 113, the node that forwards the multicast packet, for example, after the first edge node determines the root node 111 as the node that forwards the multicast packet, when receiving the multicast packet sent by the multicast source with the route prefix 10.1.1.0/24, the first edge node may forward the multicast packet to the root node 111 through the interface 1. In this way, the root node 111 may determine, based on the anycast-RPF check list of the root node 111, that the received multicast packet from the multicast source with the route prefix 10.1.1.0/24 is a valid packet, and forward the multicast packet to the leaf node 12. The leaf node 12 determines, based on the anycast-RPF check list recorded by the leaf node 12, that the multicast packet that is received from the root node 111 and that is from the multicast source with the route prefix 10.1.1.0/24 is a valid packet, and forwards the multicast packet to the user edge node b. When an outbound interface list of the multicast forwarding table of the root node 111 includes an interface address for communication between the root node 111 and the root node 112 and includes an interface address for communication between the root node 111 and the root node 113, the root node 111 further forwards, to the root node 112 and the root node 113, the received multicast packet from the multicast source with the route prefix 10.1.1.0/24. Further, the root node 112 and the root node 113 each determine, based on the respective anycast-RPF check lists recorded by the root node 112 and the root node 113, the multicast packet that is received from the root node 111 and that is from the multicast source with the route prefix 10.1.1.0/24 as a valid packet. In this way, when the root node 112 and the root node 113 are respectively connected to local multicast receivers, the root node 112 and the root node 113 may separately forward, to the respective local multicast receivers, the multicast packet received from the root node 111.

The foregoing mainly describes the solutions provided in embodiments of this application from the perspective of the methods.

To implement the foregoing functions, FIG. 15 is diagram of a structure of a node determining apparatus 150 according to an embodiment of this application. The node determining apparatus 150 is applied to the foregoing first root node, and is configured to perform the foregoing node determining method, for example, configured to perform the method shown in FIG. 4, FIG. 6, FIG. 7, FIG. 8, or FIG. 9. The node determining apparatus 150 may include a receiving unit 151 and an execution unit 152.

The receiving unit 151 is configured to receive first information sent by a second root node, where the first information includes multicast source information and a first flag, and the first flag indicates to determine, through negotiation, a node that forwards a multicast packet. The execution unit 152 is configured to perform, based on the received multicast source information and the received first flag, an operation of determining, from the first root node and the second root node, the node that forwards the multicast packet.

In an example, with reference to FIG. 4, the receiving unit 151 may be configured to perform S101, and the execution unit 152 may be configured to perform S102.

Optionally, the execution unit 152 is specifically configured to: perform, based on the first flag carried in the first information, the operation of determining the node that forwards the multicast packet; and determine, from the first root node and the second root node based on the multicast source information carried in the first information, multicast source information corresponding to the first root node, and multicast source information corresponding to the second root node, the node that forwards the multicast packet.

Optionally, the first information further includes a first identifier of the second root node, and the node determining apparatus 150 further includes: a determining unit 153, configured to: obtain a sorting result based on an identifier of the first root node and the first identifier of the second root node, and determine, based on the obtained sorting result, that the first root node is the node that forwards the multicast packet.

In an example, with reference to FIG. 6, the determining unit 153 may be configured to perform S103 and S 104.

Optionally, the first information further includes a first identifier of the second root node, and the determining unit 153 is configured to: obtain a first index based on a first multicast group address included in a received first multicast join request and a first multicast source address that matches the multicast source information; obtain a second index based on a second multicast group address included in a received second multicast join request and a second multicast source address that matches the multicast source information; obtain a sorting result based on an identifier of the first root node and the first identifier of the second root node; and determine, based on the first index and the sorting result, that the first root node is a node that forwards a multicast packet from the first multicast source address, or determine, based on the second index and the sorting result, that the first root node is a node that forwards a multicast packet from the second multicast source address.

In an example, with reference to FIG. 7, the determining unit 153 may be configured to perform S103, S103a, and S104a.

Optionally, if the first information is UMH routing information, an NLRI key of the first information includes the multicast source information, and an extended attribute field of the first information includes a BGP attribute field, a community attribute field, or an extended community attribute field that is used to carry the first flag.

Optionally, the NLRI key further includes an RD of the second root node, or the NLRI key further includes an RD of the second root node and a second identifier of the second root node.

Optionally, the first information is UMH routing information, and a VRI field of the UMH routing information is used to carry the first identifier of the second root node.

Optionally, the first information is UMH routing information, and an NLRI key of the UMH routing information includes an RD of the second root node, or an NLRI key of the UMH routing information includes an RD of the second root node and a second identifier of the second root node.

Optionally, when the first root node is a node that forwards a multicast packet from a third multicast source, and the third multicast source may be, for example, the foregoing first multicast source or the foregoing second multicast source, the node determining apparatus 150 further includes a sending unit 154, configured to send the multicast source information and the first flag to a leaf node of a third multicast group, so that the leaf node of the third multicast group determines that a multicast packet that is from the first root node and that matches the multicast source information is a valid packet, where the multicast source information is used to identify the third multicast source.

In an example, with reference to FIG. 8, the sending unit 154 may be configured to perform S106.

Optionally, when the first root node is a node that forwards a multicast packet from a third multicast source, and the third multicast source may be, for example, the foregoing first multicast source or the foregoing second multicast source, the sending unit 154 is further configured to send an attribute distinguisher of the first root node to a leaf node of a third multicast group, where the attribute distinguisher of the first root node corresponds to an IPv6-based loopback address of the first root node, and the attribute distinguisher of the first root node is used to distinguish between multicast join requests sent by the leaf node to the first root node.

Optionally, the first information further includes BFD information, where the BFD information includes a BFD session discriminator of the second root node and an interface address of the second root node.

Optionally, when the second root node is a node that forwards a multicast packet from a fourth multicast source, and the fourth multicast source may be, for example, the foregoing first multicast source or the foregoing second multicast source, the node determining apparatus 150 further includes: an establishment unit 155, configured to establish a BFD session with the second root node based on the received BFD information. The sending unit 154 is further configured to: after the first root node determines, based on the BFD session, that the second root node is faulty, forward the multicast packet from the fourth multicast source to a leaf node of a fourth multicast group.

For example, with reference to FIG. 9, the establishment unit 155 may be configured to perform S203, and the sending unit 154 may be configured to perform S204.

For specific descriptions of the foregoing optional manners, refer to the foregoing method embodiments. Details are not described herein again. In addition, for descriptions of any explanation and beneficial effect of the node determining apparatus 150 provided above, refer to the foregoing corresponding method embodiments. Details are not described herein again.

For example, with reference to FIG. 3, functions implemented by the execution unit 152, the determining unit 153, and the establishment unit 155 in the node determining apparatus 150 may be implemented by the processor 31 in FIG. 3 by executing program code in the memory 32 in FIG. 3. Functions implemented by the receiving unit 151 and the sending unit 154 may be implemented through the network interface 33 in FIG. 3.

FIG. 16 is diagram of a structure of a node determining apparatus 160 according to an embodiment of this application. The node determining apparatus 160 is applied to the foregoing first root node, and is configured to perform the foregoing node determining method. The node determining apparatus 160 may include a receiving unit 161 and a sending unit 162.

The receiving unit 161 is configured to receive a multicast packet sent by a user edge node, where the first root node at which the receiving unit 161 is located is a node that is determined by the user edge node from the first root node and a second root node according to a preset policy and that is configured to forward the multicast packet. The sending unit 162 is configured to send the multicast packet to a leaf node that joins a multicast group corresponding to the first root node.

Optionally, the preset policy includes: randomly selecting, from the first root node and the second root node, the node configured to forward the multicast packet; or selecting, from the first root node and the second root node according to a load balancing algorithm, the node configured to forward the multicast packet.

Optionally, the receiving unit 161 is specifically configured to receive the multicast packet sent through a first interface of the user edge node, where the first interface is an interface that is in an Eth-Trunk interface of the first root node, that is determined according to the preset policy, and that is used to send the multicast packet.

Optionally, the sending unit 162 is further configured to send multicast source information and a second flag to the leaf node, so that the leaf node determines that a multicast packet that is from the first root node and that matches the multicast source information is a valid packet, where the second flag indicates the node that is determined to forward the multicast packet.

In an example, with reference to FIG. 14, the sending unit 162 may be configured to perform S404.

Optionally, the sending unit 162 is further configured to send an attribute distinguisher of the first root node to the leaf node, where the attribute distinguisher of the first root node corresponds to a loopback address of the first root node, the loopback address of the first root node is an IPv6 address, and the attribute distinguisher of the first root node is used to distinguish between multicast join requests sent by the leaf node to the first root node.

For specific descriptions of the foregoing optional manners, refer to the foregoing method embodiments. Details are not described herein again. In addition, for descriptions of any explanation and beneficial effect of the node determining apparatus 160 provided above, refer to the foregoing corresponding method embodiments. Details are not described herein again.

For example, with reference to FIG. 3, functions implemented by the receiving unit 161 and the sending unit 162 may be implemented through the network interface 33 in FIG. 3.

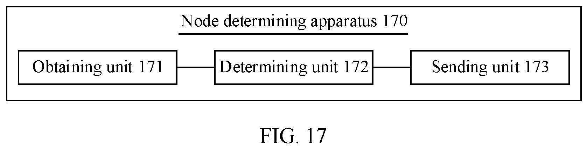

FIG. 17 is diagram of a structure of a node determining apparatus 170 according to an embodiment of this application. The node determining apparatus 170 is applied to the foregoing first edge node, and is configured to perform the foregoing node determining method, for example, configured to perform the method shown in FIG. 13. The node determining apparatus 170 may include an obtaining unit 171 and a determining unit 172.

The obtaining unit 171 is configured to obtain a second flag, where the second flag indicates a node that is determined to forward a multicast packet. The determining unit 172 is configured to determine, from a first root node and a second root node according to a second indication and a preset policy, the node that forwards the multicast packet.

For example, with reference to FIG. 13, the obtaining unit 171 may be configured to perform S301, and the determining unit 172 may be configured to perform S302.

Optionally, the preset policy includes: randomly selecting, from the first root node and the second root node, the node configured to forward the multicast packet; or selecting, from the first root node and the second root node according to a load balancing algorithm, the node configured to forward the multicast packet.

Optionally, the first edge node includes an Eth-Trunk interface, and the Eth-Trunk interface includes a first interface for communicating with the first root node and a second interface for communicating with the second root node. The determining unit 172 is specifically configured to: determine a target interface from the first interface and the second interface according to the second indication and the preset policy, and determine a root node that communicates with the target interface as the node that forwards the multicast packet.

In an example, with reference to FIG. 13, the determining unit 172 may be configured to perform S302.

Optionally, the node determining apparatus 170 further includes a sending unit 173, configured to send a multicast packet from the multicast source to the node that is determined to forward the multicast packet.

In an example, with reference to FIG. 13, the sending unit 173 may be configured to perform S303.

For specific descriptions of the foregoing optional manners, refer to the foregoing method embodiments. Details are not described herein again. In addition, for descriptions of any explanation and beneficial effect of the node determining apparatus 170 provided above, refer to the foregoing corresponding method embodiments. Details are not described herein again.

For example, with reference to FIG. 3, functions implemented by the obtaining unit 171 and the determining unit 172 in the node determining apparatus 170 may be implemented by the processor 31 in FIG. 3 by executing program code in the memory 32 in FIG. 3. A function implemented by the sending unit 173 may be implemented through the network interface 33 in FIG. 3.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be noted that, module division in FIG. 15, FIG. 16, and FIG. 17 is an example, and is merely a logical function division. During actual implementation, another division manner may be used. For example, two or more functions may be integrated into one processing module. The integrated module may be implemented in a form of hardware, or may be implemented in a form of a software functional module.

An embodiment of this application further provides a computer program product and a computer-readable storage medium configured to store the computer program product. The computer program product may include one or more program instructions. When the one or more program instructions are run by one or more processors, functions or some functions described in FIG. 4, FIG. 6, FIG. 7, FIG. 8, FIG. 9, FIG. 13, or FIG. 14 may be provided. Therefore, for example, one or more features of S101 and S102 in FIG. 4 may be implemented by the one or more instructions in the computer program product.

In some examples, the node determining apparatus described in FIG. 15, FIG. 16, or FIG. 17 may be configured to provide various operations, functions, or actions in response to the one or more program instructions stored in the computer-readable storage medium.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer-executable instructions are executed on a computer, procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A node determining method, wherein the method comprises:
receiving, by a first root node, first information sent by a second root node, wherein the first information comprises multicast source information and a first flag, and the first flag indicates to determine, through negotiation, a node that forwards a multicast packet; and
performing, by the first root node based on the multicast source information and the first flag, an operation of determining, from the first root node and the second root node, the node that forwards the multicast packet.

2. The method according to claim 1, wherein the performing, by the first root node based on the multicast source information and the first flag, an operation of determining, from the first root node and the second root node, the node that forwards the multicast packet comprises:
performing, by the first root node based on the first flag, the operation of determining the node that forwards the multicast packet; and
determining, by the first root node from the first root node and the second root node based on the multicast source information, multicast source information corresponding to the first root node, and multicast source information corresponding to the second root node, the node that forwards the multicast packet.

3. The method according to claim 1 or 2, wherein the first information further comprises a first identifier of the second root node, and the method further comprises:
obtaining, by the first root node, a sorting result based on an identifier of the first root node and the first identifier of the second root node; and
determining, by the first root node based on the sorting result, that the first root node is the node that forwards the multicast packet.

4. The method according to claim 1 or 2, wherein the first information further comprises a first identifier of the second root node, and the method further comprises:
obtaining, by the first root node, a first index based on a first multicast group address comprised in a received first multicast join request and a first multicast source address that matches the multicast source information;
obtaining, by the first root node, a second index based on a second multicast group address comprised in a received second multicast join request and a second multicast source address that matches the multicast source information;
obtaining, by the first root node, a sorting result based on an identifier of the first root node and the first identifier of the second root node; and
determining, by the first root node based on the first index and the sorting result, that the first root node is a node that forwards a multicast packet from the first multicast source address, or determining, based on the second index and the sorting result, that the first root node is a node that forwards a multicast packet from the second multicast source address.

5. The method according to any one of claims 1 to 4, wherein the first information is upstream multicast hop UMH routing information, a network layer reachability information NLRI key of the UMH routing information comprises the multicast source information, and an extended attribute field of the UMH routing information comprises a BGP attribute field, a community attribute field, or an extended community attribute field that is used to carry the first flag.

6. The method according to claim 5, wherein the NLRI key further comprises a route distinguisher RD of the second root node, or the NLRI key further comprises an RD of the second root node and a second identifier of the second root node.

7. The method according to claim 3, wherein the first information is UMH routing information, and a virtual routing forwarding route import extended community VRI field of the UMH routing information is used to carry the first identifier of the second root node.

8. The method according to claim 3, wherein the first information is UMH routing information, and an NLRI key of the UMH routing information comprises a route distinguisher RD of the second root node, or an NLRI key of the UMH routing information comprises an RD of the second root node and a second identifier of the second root node.

9. The method according to any one of claims 1 to 8, wherein the first root node is a node that forwards a multicast packet from a third multicast source, and the method further comprises:
sending, by the first root node, the multicast source information and the first flag to a leaf node of a third multicast group, so that the leaf node of the third multicast group determines that a multicast packet that is from the first root node and that matches the multicast source information is a valid packet, wherein the multicast source information is used to identify the third multicast source.

10. The method according to any one of claims 1 to 8, wherein the first root node is a node that forwards a multicast packet from a third multicast source, and the method further comprises:
sending, by the first root node, an attribute distinguisher of the first root node to a leaf node of a third multicast group, wherein the attribute distinguisher of the first root node corresponds to an IPv6-based loopback address, and the attribute distinguisher of the first root node is used to distinguish between multicast join requests sent by the leaf node to the first root node.

11. The method according to any one of claims 1 to 10, wherein the first information further comprises BFD information, and the BFD information comprises a BFD session discriminator of the second root node and an interface address of the second root node.

12. The method according to claim 11, wherein the second root node is a node that forwards a multicast packet from a fourth multicast source, and the method further comprises:
establishing, by the first root node, a BFD session with the second root node based on the BFD information; and
after the first root node determines, based on the BFD session, that the second root node is faulty, forwarding, by the first root node, the multicast packet from the fourth multicast source to a leaf node of a fourth multicast group.

13. A node determining method, wherein the method comprises:
receiving, by a first root node, a multicast packet sent by a user edge node, wherein the first root node is a node that is determined by the user edge node from the first root node and a second root node according to a preset policy and that is configured to forward the multicast packet; and
sending, by the first root node, the multicast packet to a leaf node that joins a multicast group corresponding to the first root node.

14. The method according to claim 13, wherein the preset policy comprises:
randomly selecting, from the first root node and the second root node, the node configured to forward the multicast packet; or selecting, from the first root node and the second root node according to a load balancing algorithm, the node configured to forward the multicast packet.

15. The method according to claim 13 or 14, wherein the receiving, by a first root node, a multicast packet sent by a user edge node comprises:
receiving, by the first root node, the multicast packet sent through a first interface of the user edge node, wherein the first interface is an interface that is in an Ethernet link aggregation Eth-Trunk interface, that is determined according to the preset policy, and that is used to send the multicast packet.

16. The method according to any one of claims 13 to 15, wherein the method further comprises:
sending, by the first root node, multicast source information and a second flag to the leaf node, so that the leaf node determines that a multicast packet that is from the first root node and that matches the multicast source information is a valid packet, wherein the second flag indicates the node that is determined to forward the multicast packet.

17. The method according to any one of claims 13 to 16, wherein the method further comprises:
sending, by the first root node, an attribute distinguisher of the first root node to the leaf node, wherein the attribute distinguisher of the first root node corresponds to an IPv6-based loopback address, and the attribute distinguisher of the first root node is used to distinguish between multicast join requests sent by the leaf node to the first root node.

18. A node determining apparatus, applied to a first root node, wherein the apparatus comprises:
a receiving unit, configured to receive first information sent by a second root node, wherein the first information comprises multicast source information and a first flag, and the first flag indicates to determine, through negotiation, a node that forwards a multicast packet; and
an execution unit, configured to perform, based on the multicast source information and the first flag, an operation of determining, from the first root node and the second root node, the node that forwards the multicast packet.

19. The apparatus according to claim 18, wherein the execution unit is specifically configured to:
perform, based on the first flag, the operation of determining the node that forwards the multicast packet; and
determine, from the first root node and the second root node based on the multicast source information, multicast source information corresponding to the first root node, and multicast source information corresponding to the second root node, the node that forwards the multicast packet.

20. The apparatus according to claim 18 or 19, wherein the first information further comprises a first identifier of the second root node, and the apparatus further comprises:
a determining unit, configured to: obtain a sorting result based on an identifier of the first root node and the first identifier of the second root node; and determine, based on the sorting result, that the first root node is the node that forwards the multicast packet.

21. The apparatus according to claim 18 or 19, wherein the first information further comprises a first identifier of the second root node, the apparatus further comprises a determining unit, and the determining unit is configured to:
obtain a first index based on a first multicast group address comprised in a received first multicast join request and a first multicast source address that matches the multicast source information;
obtain a second index based on a second multicast group address comprised in a received second multicast join request and a second multicast source address that matches the multicast source information;
obtain a sorting result based on an identifier of the first root node and the first identifier of the second root node; and
determine, based on the first index and the sorting result, that the first root node is a node that forwards a multicast packet from the first multicast source address, or determine, based on the second index and the sorting result, that the first root node is a node that forwards a multicast packet from the second multicast source address.

22. The apparatus according to any one of claims 18 to 21, wherein the first information is upstream multicast hop UMH routing information, a network layer reachability information NLRI key of the UMH routing information comprises the multicast source information, and an extended attribute field of the UMH routing information comprises a BGP attribute field, a community attribute field, or an extended community attribute field that is used to carry the first flag.

23. The apparatus according to claim 22, wherein the NLRI key further comprises a route distinguisher RD of the second root node, or the NLRI key further comprises an RD of the second root node and a second identifier of the second root node.

24. The apparatus according to claim 20, wherein the first information is UMH routing information, and a virtual routing forwarding route import extended community VRI field of the UMH routing information is used to carry the first identifier of the second root node.

25. The apparatus according to claim 20, wherein the first information is UMH routing information, and an NLRI key of the UMH routing information comprises a route distinguisher RD of the second root node, or an NLRI key of the UMH routing information comprises an RD of the second root node and a second identifier of the second root node.

26. The apparatus according to any one of claims 18 to 25, wherein the first root node is a node that forwards a multicast packet from a third multicast source, and the apparatus further comprises:
a sending unit, configured to send the multicast source information and the first flag to a leaf node of a third multicast group, so that the leaf node of the third multicast group determines that a multicast packet that is from the first root node and that matches the multicast source information is a valid packet, wherein the multicast source information is used to identify the third multicast source.

27. The apparatus according to any one of claims 18 to 25, wherein the first root node is a node that forwards a multicast packet from a third multicast source, and the apparatus further comprises:
a sending unit, configured to send an attribute distinguisher of the first root node to a leaf node of a third multicast group, wherein the attribute distinguisher of the first root node corresponds to an IPv6-based loopback address, and the attribute distinguisher of the first root node is used to distinguish between multicast join requests sent by the leaf node to the first root node.

28. The apparatus according to any one of claims 18 to 27, wherein the first information further comprises BFD information, and the BFD information comprises a BFD session discriminator of the second root node and an interface address of the second root node.

29. The apparatus according to claim 28, wherein the second root node is a node that forwards a multicast packet from a fourth multicast source, and the apparatus further comprises:
an establishment unit, configured to establish a BFD session with the second root node based on the BFD information; and
a sending unit, configured to: after the first root node determines, based on the BFD session, that the second root node is faulty, forward the multicast packet from the fourth multicast source to a leaf node of a fourth multicast group.

30. A node determining apparatus, applied to a first root node, wherein the apparatus comprises:
a receiving unit, configured to receive a multicast packet sent by a user edge node, wherein the first root node is a node that is determined by the user edge node from the first root node and a second root node according to a preset policy and that is configured to forward the multicast packet; and
a sending unit, configured to send the multicast packet to a leaf node that joins a multicast group corresponding to the first root node.

31. The apparatus according to claim 30, wherein the preset policy comprises:
randomly selecting, from the first root node and the second root node, the node configured to forward the multicast packet; or selecting, from the first root node and the second root node according to a load balancing algorithm, the node configured to forward the multicast packet.

32. The apparatus according to claim 30 or 31, wherein
the receiving unit is specifically configured to receive the multicast packet sent through a first interface of the user edge node, wherein the first interface is an interface that is in an Ethernet link aggregation Eth-Trunk interface, that is determined according to the preset policy, and that is used to send the multicast packet.

33. The apparatus according to any one of claims 30 to 32, wherein
the sending unit is further configured to send multicast source information and a second flag to the leaf node, so that the leaf node determines that a multicast packet that is from the first root node and that matches the multicast source information is a valid packet, wherein the second flag indicates the node that is determined to forward the multicast packet.

34. The apparatus according to any one of claims 30 to 33, wherein
the sending unit is further configured to send an attribute distinguisher of the first root node to the leaf node, wherein the attribute distinguisher of the first root node corresponds to an IPv6-based loopback address, and the attribute distinguisher of the first root node is used to distinguish between multicast join requests sent by the leaf node to the first root node.

35. A node determining apparatus, comprising a memory, a network interface, and one or more processors, wherein the one or more processors receive or send data through the network interface, and the one or more processors are configured to read program instructions stored in the memory, to perform the method according to any one of claims 1 to 12 or any one of claims 13 to 17.
